# EUROPÄISCHE PATENTSCHRIFT

(11) **EP 3 927 593 B1**
(45) Veröffentlichungstag und Bekanntmachung des Hinweises auf die Patenterteilung: **06.08.2025**
(21) Anmeldenummer: 20710816.8
(22) Anmeldetag: 28.02.2020
(51) Int. Cl.: B60T 8/17, B60T 8/88, B61L 25/02

(54) **VERFAHREN ZUM ERKENNEN VON SYSTEMATISCHEN ABWEICHUNGEN BEIM BESTIMMEN EINER BEWEGUNGSGRÖSSE EINES BODENGEBUNDENEN, INSBESONDERE SCHIENENGEBUNDENEN, FAHRZEUGS, SOWIE ENTSPRECHENDE VORRICHTUNG UND ENTSPRECHENDES FAHRZEUG**
METHOD FOR DETECTING SYSTEMATIC DEVIATIONS DURING DETERMINATION OF A MOVEMENT VARIABLE OF A GROUND-BASED, MORE PARTICULARLY RAIL-BASED, VEHICLE, AND CORRESPONDING APPARATUS AND VEHICLE
PROCÉDÉ DE DÉTECTION D'ÉCARTS SYSTÉMATIQUES LORS DE LA DÉTERMINATION D'UNE GRANDEUR DE MOUVEMENT D'UN VÉHICULE TERRESTRE, EN PARTICULIER D'UN VÉHICULE FERROVIAIRE, ET APPAREIL ET VÉHICULE ASSOCIÉS

(30) Priorität: 29.03.2019 DE 102019204519
(43) Veröffentlichungstag der Anmeldung: 29.12.2021
(73) Patentinhaber: Siemens Mobility GmbH, 81739 München (DE)
(72) Erfinder: JOHANNES, Lars, 38108 Braunschweig (DE)
(74) Vertreter: Siemens Patent Attorneys
(86) Internationale Anmeldenummer: PCT/EP2020/055246
(87) Internationale Veröffentlichungsnummer: WO 2020/200593

(56) Entgegenhaltungen:
- WO-A1-2017/121579
- WO-A1-2018/177677
- DE-A1- 102014 226 612
- DE-A1- 102017 212 179

## Beschreibung

Die Erfindung betrifft ein Verfahren zum Erkennen von systematischen Abweichungen beim Bestimmen einer Bewegungsgröße eines bodengebundenen, insbesondere schienengebundenen, Fahrzeugs.

Die Erfindung betrifft auch eine Anordnung zum Erkennen von systematischen Abweichungen beim Bestimmen einer Bewegungsgröße eines bodengebundenen, insbesondere schienengebundenen, Fahrzeugs, welche zur Durchführung des erfindungsgemäßen Verfahrens geeignet ausgebildet ist.

Außerdem betrifft die Erfindung ein bodengebundenen, insbesondere schienengebundenen, Fahrzeugs mit einer derartigen Anordnung.

Aus der Druckschrift DE 10 2017 212 179 A1 ist ein Verfahren zur Korrektur einer gemessenen Position eines schienengebundenen Fahrzeugs bekannt, bei dem eine Detektionseinheit auf der Basis von Signaldaten von unterschiedlichen Sensoren und Empfangseinrichtungen positionsrelevante Informationen ermittelt, wobei eine Prüfeinheit anhand der positionsrelevanten Informationen ermittelt, ob eine bisher gemessene Position des schienengebundenen Fahrzeugs fehlerhaft ist. Dabei können die positionsrelevanten Informationen direkt auf eine korrekte aktuelle Position des schienengebundenen Fahrzeugs schließen lassen.

Beim Betrieb eines bodengebundenen Fahrzeugs kommt sowohl der dynamischen Ortung des Fahrzeugs - also der Bestimmung des Bewegungszustandes durch Bestimmung zumindest einer Bewegungsgröße des Fahrzeugs - als auch der sicheren Berechnung sogenannter Vertrauensintervallgrenzen für die zumindest eine Bewegungsgröße (auch bezeichnet als Konfidenzintervallgrenzen) eine besondere Bedeutung zu.

Als Bewegungsgröße soll im Rahmen der vorliegenden Erfindung eine physikalische Größe verstanden werden, welche den Bewegungszustand des bodengebundenen Fahrzeugs selbst charakterisiert bzw. anhand welcher, beispielsweise durch geeignete Berechnungen, eine andere Größe bestimmt werden kann, die dann den Bewegungszustand des bodengebundenen Fahrzeugs charakterisiert. Als Bewegungsgrößen sind somit im Rahmen der Erfindung beispielsweise der vom Fahrzeug zurückgelegte Weg, die Geschwindigkeit des Fahrzeugs und die Beschleunigung des Fahrzeugs zu verstehen. Als Bewegungsgröße ist aber auch die Position des Fahrzeugs zu verstehen, da anhand dieser der zurückgelegte Weg bestimmt werden kann.

In der Praxis werden diese Bewegungsgrößen auch als Ortungsgrößen bezeichnet. Die Bestimmung einer Bewegungsgröße (Ortungsgröße) erfolgt bezogen auf ein Bezugssystem bzw. auf einen Bezugspunkt in einem Bezugssystem, wobei das Bezugssystem beispielsweise lokal oder global sein kann.

Die Aufnahme bzw. das Erfassen von Messwerten einer jeweiligen dieser Bewegungsgrößen erfolgt in bekannter Weise mittels Sensoren. In der Praxis kommen als Sensoren insbesondere sogenannte Ortungssensoren zum Einsatz. Bekannte Typen von Ortungssensoren - also bekannte Sensortypen zum Bestimmen einer Bewegungsgröße - sind Weginkrementalgeber, Doppler-Radarsensoren (kurz Dopplerradare) und Satellitennavigationssystemempfänger.

Das Erfassen der Messwerte unterliegt Fehlern, welche in zufällige und systematische Fehler unterteilt werden können.

Insbesondere weist ein jeweiliger Sensor seine eigenen zufälligen Fehler - also seine eigene zufällige Fehlercharakteristik, welche sich von der zufälligen Fehlercharakteristik anderer Sensoren unterscheidet bzw. zumindest unterscheiden kann, auf.

Außerdem unterscheiden sich Sensoren eines jeweiligen Sensortyps hinsichtlich ihrer zufälligen Fehlercharakteristiken von den Sensoren anderer Sensortypen.

Bei Ortungssensoren, beispielsweise bei Ortungssensoren zur Bestimmung des momentan zurückgelegten Weges oder der momentanen Geschwindigkeit, können sich die systematischen Fehler, denen diese unterliegen, unterschiedlich stark auf die zu bestimmende Ortungsgröße auswirken. Die Einflüsse der systematischen Fehler auf die Bestimmung der jeweiligen Ortungsgröße können also unterschiedlich stark ausgeprägt sein und wirken oft zusammen.

Ein systematischer Fehler kann zumindest einen Fehleranteil in Form einer systematischen Abweichung (eines systematischen Effektes) aufweisen, welche aus dem jeweiligen Sensorprinzip des Sensortyps herrührt. Eine solche systematische Abweichung wird auch als innere systematische Abweichung bezeichnet.

Darüber hinaus kann ein systematischer Fehler auch zumindest einen Fehleranteil in Form einer systematischen Abweichung aufweisen, welche durch die umgebende Umwelt verursacht ist. Eine solche systematische Abweichung wird dann als externe systematische Abweichung bezeichnet.

Ein Beispiel für einen systematischen Fehler ist ein Fehler durch Schlupf der Räder einer Achse des Fahrzeugs - also das Rutschen der Räder beim Beschleunigen, welches auch als Schleudern oder Schleuderschlupf bezeichnet wird, und das Rutschen der Räder beim Abbremsen, welches auch als Gleiten oder Gleitschlupf bezeichnet wird. Ein einer Achse des Fahrzeugs zugeordneter Weginkrementalgeber misst beim Schleudern einen zu langen Weg bzw. beim Gleiten einen zu kurzen Weg. Ein durch ein Achssteuergerät beim Ansteuern einer Achse eines Fahrzeugs verursachter systematischer Fehleranteil bildet beispielsweise eine innere systematische Abweichung. Hingegen bildet ein durch eine Unregelmäßigkeit des Reibungskoeffizienten zwischen Rad und Boden bzw. bei einem schienengebundenen Fahrzeug zwischen Rad und Schiene verursachter systematischer Fehleranteil eine externe systematische Abweichung.

Typische externe Fehlerquellen bei der Aufnahme von Messwerten mittels eines Doppler-Radarsensors resultieren aus der Untergrundbeschaffenheit und durch Schnee oder Eis, welcher bzw. welches am Doppler-Radarsensor anhaftet.

Momentan werden in der Praxis beispielsweise für unterschiedliche Sensoren einheitliche Grenzwerte zur Erkennung systematischer Abweichungen (systematischer Effekte), deren Vorliegen eine Neuberechnung der Vertrauensintervallgrenzen erforderlich macht, festgelegt. Dabei werden die Grenzwerte oft derart getunt, dass diese zuverlässig für die unterschiedlichen oder für neu hinzugefügte Sensoren funktionieren. Oft werden Messwerte von Sensoren vor dem Vergleich mit den einheitlich festgelegten Grenzwerten geglättet. Die Glättung kann sich als eine Tiefpassfilterung negativ auf das Erkennen plötzlicher Beschleunigungs- und Bremsvorgänge auswirken. Es kann beispielweise zu einem Unterschießen oder zu einem Überschießen bei einer Bestimmung der Geschwindigkeit des Fahrzeugs kommen.

Das sensorübergreifende Festlegen bzw. Einstellen einheitlich festgelegter Grenzwerte kann also dazu führen, dass beispielsweise beim Messen mit einem Weginkrementalgeber oft fälschlich Gleitschlupf erkannt wird und die Vertrauensintervallgrenzen dann vergrößert werden müssen. Werden die Vertrauensintervallgrenzen danach nicht rechtzeitig verkleinert, so führt dies zu betrieblichen Einschränkungen beim Betrieb des bodengebundenen Fahrzeugs. Beispielsweise muss das Fahrzeug, insbesondere ein schienengebundenes Fahrzeug, längere Zeit langsamer fahren und verspätet sich oder es wird in einem Bahnhofsbereich nicht exakt in einem Türbereich gehalten oder es werden teilweise sogar Zwangsbremsungen ausgelöst.

Der Erfindung liegt die Aufgabe zu Grunde, den Betrieb eines bodengebundenen Fahrzeugs zu optimieren, insbesondere die genannten betrieblichen Einschränkungen beim Betrieb des bodengebundenen Fahrzeugs zu minimieren.

Gelöst wird diese Aufgabe ausgehend von einem Verfahren zum Erkennen von systematischen Abweichungen beim Bestimmen einer Bewegungsgröße eines bodengebundenen, insbesondere schienengebundenen, Fahrzeugs,- bei dem anhand eines einem Zeitpunkt zugeordneten Messwertes zumindest eines Sensors ein dem Zeitpunkt zugeordneter Wert der Bewegungsgröße bestimmt wird (DE 10 2017 212 179 A1), dadurch, dass
- in Abhängigkeit des dem Zeitpunkt zugeordneten Wertes der Bewegungsgröße und eines für diesen Wert bestimmten statistischen Sensorgenauigkeitswertes des zumindest einen Sensors ein dem Zeitpunkt zugeordneter Testgrößenwert gebildet und im Zuge eines Vergleiches mit einer vorgegebene Testschranke verglichen wird, um in Abhängigkeit eines bei dem Vergleich gewonnenen Vergleichsergebnisses eine Annahme hinsichtlich eines Vorliegens einer systematischen Abweichung zu treffen,
- wobei der Testgrößenwert zusätzlich in Abhängigkeit eines voraussichtlichen Wertes der Bewegungsgröße für den Zeitpunkt gebildet wird,
- wobei anhand eines auf einen vorhergehenden Systemzustand des Fahrzeugs angewandten Bewegungsmodells ein voraussichtlicher Systemzustand des Fahrzeugs für den Zeitpunkt ermittelt wird und
- anhand eines auf den voraussichtlichen Systemzustand angewandten Transfermodells der voraussichtliche Wert der Bewegungsgröße für den Zeitpunkt ermittelt wird.

Erfindungsgemäß wird damit zum Treffen der Annahme hinsichtlich des Vorliegens einer systematischen Abweichung, insbesondere zum sicheren Aufzeigen dessen, ob signifikante systematische Abweichungen vorliegen, vorliegen könnten oder nicht vorliegen, der zuvor ermittelte statistische Sensorgenauigkeitswert und damit eine zufällige Fehlercharakteristik des zum Messen verwendeten Sensors berücksichtigt. Somit können in vorteilhafter Weise systematische Abweichungen zuverlässig von zufälligen Abweichungen unterschieden werden.

Bei einer vorteilhaften Ausgestaltung des erfindungsgemäßen Verfahrens ist vorgesehen, dass der Betriebszustand eines Timers, welcher im Falle einer zuvor getroffenen Annahme, dass eine systematische Abweichung vorliegt, gestartet wurde, zu dem Zeitpunkt ausgelesen wird. Beim Auslesen des Betriebszustandes des Timers wird festgestellt, ob dieser läuft - sich also in seinem aktiven Betriebszustand befindet - oder nicht läuft - sich also in seinem passiven Betriebszustand befindet.

In vorteilhafter Weise ist dann vorgesehen, dass die Annahme hinsichtlich des Vorliegens einer systematischen Abweichung wie folgt getroffen wird:
- wenn der dem Zeitpunkt zugeordnete Testgrößenwert größer als die vorgegebene Testschranke ist, dann wird das Vorliegen einer systematischen Abweichung zu dem Zeitpunkt angenommen,
- wenn der Testgrößenwert kleiner als die vorgegebene Testschranke ist und außerdem der Timer läuft, dann wird das Vorliegen einer systematischen Abweichung zu dem Zeitpunkt nicht ausgeschlossen,
- wenn der Testgrößenwert kleiner als die vorgegebene Testschranke ist und außerdem der Timer nicht läuft, dann wird das Vorliegen einer systematischen Abweichung zu dem Zeitpunkt ausgeschlossen.

Vorzugsweise wird ein zusätzlicher Testgrößenwert gebildet und im Zuge eines zusätzlichen Vergleiches mit einer vorgegebenen zusätzlichen Testschranke verglichen, um die Annahme hinsichtlich des Vorliegens einer systematischen Abweichung auch in Abhängigkeit eines bei dem zusätzlichen Vergleich gewonnenen zusätzlichen Vergleichsergebnisses zu treffen.

In vorteilhafter Weise ist dann vorgesehen, dass die Annahme hinsichtlich des Vorliegens einer systematischen Abweichung wie folgt getroffen wird:
- wenn der dem Zeitpunkt zugeordnete Testgrößenwert größer als die vorgegebene Testschranke ist und/oder wenn der zusätzliche Testgrößenwert größer als die vorgegebene zusätzliche Testschranke ist, dann wird das Vorliegen einer systematischen Abweichung zu dem Zeitpunkt angenommen,
- wenn einerseits der Testgrößenwert kleiner als die vorgegebene Testschranke sowie andererseits der zusätzliche Testgrößenwert kleiner als die vorgegebene zusätzliche Testschranke ist und außerdem der Timer läuft, dann wird das Vorliegen einer systematischen Abweichung zu dem Zeitpunkt nicht ausgeschlossen,
- wenn einerseits der Testgrößenwert kleiner als die vorgegebene Testschranke sowie andererseits der zusätzliche Testgrößenwert kleiner als die vorgegebene zusätzliche Testschranke ist und außerdem der Timer nicht läuft, dann wird das Vorliegen einer systematischen Abweichung zu dem Zeitpunkt ausgeschlossen.

Im Falle dessen, dass zumindest ein weiterer Sensor einen dem Zeitpunkt zugeordneten weiteren Messwert bereitstellt, ist mi Vorteil vorgesehen, dass
- anhand dieses weiteren Messwertes ein dem Zeitpunkt zugeordneter weiterer Wert der Bewegungsgröße bestimmt wird und
- in Abhängigkeit des dem Zeitpunkt zugeordneten weiteren Wertes der Bewegungsgröße und eines für diesen weiteren Wert bestimmten statistischen Sensorgenauigkeitswertes des weiteren Sensors ein dem Zeitpunkt zugeordneter weiterer Testgrößenwert gebildet und im Zuge eines weiteren Vergleiches mit der vorgegebene Testschranke verglichen wird, um die Annahme hinsichtlich des Vorliegens einer systematischen Abweichung auch in Abhängigkeit eines bei dem weiteren Vergleich gewonnenen weiteren Vergleichsergebnisses zu treffen.

In vorteilhafter Weise ist dann vorgesehen, dass die Annahme hinsichtlich des Vorliegens einer systematischen Abweichung wie folgt getroffen wird:
- wenn der dem Zeitpunkt zugeordnete Testgrößenwert größer als die vorgegebene Testschranke ist und/oder wenn der dem Zeitpunkt zugeordnete weitere Testgrößenwert größer als die vorgegebene Testschranke ist, dann wird das Vorliegen einer systematischen Abweichung zu dem Zeitpunkt angenommen,
- wenn der dem Zeitpunkt zugeordnete Testgrößenwert und der dem Zeitpunkt zugeordnete weitere Testgrößenwert kleiner als die vorgegebene Testschranke sind und außerdem der Timer läuft, dann wird das Vorliegen einer systematischen Abweichung zu dem Zeitpunkt nicht ausgeschlossen,
- wenn der dem Zeitpunkt zugeordnete Testgrößenwert und der dem Zeitpunkt zugeordnete weitere Testgrößenwert kleiner als die vorgegebene Testschranke sind und außerdem der Timer nicht läuft, dann wird das Vorliegen einer systematischen Abweichung zu dem Zeitpunkt ausgeschlossen.

Vorzugsweise wird auch ein zusätzlicher weiterer Testgrößenwert gebildet und im Zuge eines zusätzlichen weiteren Vergleiches mit der vorgegebenen zusätzlichen Testschranke verglichen, um die Annahme hinsichtlich des Vorliegens einer systematischen Abweichung auch in Abhängigkeit eines bei dem zusätzlichen weiteren Vergleich gewonnenen zusätzlichen weiteren Vergleichsergebnisses zu treffen.

In vorteilhafter Weise ist dann vorgesehen, dass die Annahme hinsichtlich des Vorliegens einer systematischen Abweichung wie folgt getroffen wird:
- wenn zumindest eine der folgenden Bedingungen zutrifft:
   - der dem Zeitpunkt zugeordnete Testgrößenwert ist größer als die vorgegebene Testschranke,
   - der dem Zeitpunkt zugeordnete weitere Testgrößenwert ist größer als die vorgegebene Testschranke,
   - der dem Zeitpunkt zugeordnete zusätzliche Testgrößenwert ist größer als die vorgegebene zusätzliche Testschranke,
   - der dem Zeitpunkt zugeordnete zusätzliche weitere Testgrößenwert ist größer als die vorgegebene zusätzliche Testschranke,
   dann wird das Vorliegen einer systematischen Abweichung zu dem Zeitpunkt angenommen,
- wenn einerseits der Testgrößenwert und der weitere Testgrößenwert kleiner als die vorgegebene Testschranke sind sowie andererseits der zusätzliche Testgrößenwert und der zusätzliche weitere Testgrößenwert kleiner als die vorgegebene zusätzliche Testschranke sind und außerdem der Timer läuft, dann wird das Vorliegen einer systematischen Abweichung zu dem Zeitpunkt nicht ausgeschlossen,
- wenn einerseits der Testgrößenwert und der weitere Testgrößenwert kleiner als die vorgegebene Testschranke sind sowie andererseits der zusätzliche Testgrößenwert und der zusätzliche weitere Testgrößenwert kleiner als die vorgegebene zusätzliche Testschranke sind und außerdem der Timer nicht läuft, dann wird das Vorliegen einer systematischen Abweichung zu dem Zeitpunkt ausgeschlossen.

Mittels des erfindungsgemäßen Verfahrens kann also mit Vorteil bei der Bestimmung des Bewegungszustandes des bodengebundenen Fahrzeugs besser als bisher aus der Praxis bekannt beurteilt werden, ob anzunehmen ist, dass der dem Zeitpunkt zugeordnete Messwert einer signifikanten systematischen Abweichung unterliegt bzw. unterliegen könnte oder ob dies ausgeschlossen werden kann. Dies hat dann seinerseits den Vorteil, dass Vertrauensintervallgrenzen optimaler und sicherer berechnet werden können.

Vorzugsweise wird der statistische Sensorgenauigkeitswert anhand einer zuvor für den zumindest einen Sensor ermittelten Sensorkennlinie oder Sensorfunktion bestimmt.

Hierzu ist in vorteilhafter Weise vorgesehen, dass bei einer realen oder simulierten Testfahrt des Fahrzeugs oder eines an seiner statt verwendeten Testfahrzeugs mittels des zumindest einen Sensors oder mittels eines an seiner statt verwendeten Testsensors des gleichen Sensortyps jeweils Testmesswerte erfasst und anhand dieser Testmesswerte Testwerte der Bewegungsgröße bestimmt werden und dass anhand der Testwerte der Bewegungsgröße für den zumindest einen Sensor ein Verlauf seiner statistischen Sensorgenauigkeit in Abhängigkeit der Bewegungsgröße in Form der jeweiligen Sensorkennlinie bzw. Sensorfunktion bestimmt wird.

Um bei der Testfahrt den Anteil systematischer Abweichungen an den Testwerten der Bewegungsgröße möglichst minimal zu halten wird es als vorteilhaft angesehen, wenn die Bewegungsgröße des Fahrzeugs bzw. des an seiner statt verwendeten Testfahrzeugs bei der Testfahrt, insbesondere durch vorsichtiges Beschleunigen und vorsichtiges Abbremsen, derart geändert wird, dass ein Rutschen der Räder des Fahrzeugs auf dem Boden bzw. den Schienen im Wesentlichen vermieden ist.

Im Weiteren wird es als vorteilhaft angesehen, wenn
- mittels einer Tiefpassfilterung aus den Testwerten Tiefpassfilterwerte gebildet werden,
- zu jedem der Testwerte auf der Basis der Tiefpassfilterwerte eine gleitende Standardabweichung bestimmt wird und
- in eine daraufhin gebildete Darstellung der gleitenden Standardabweichungen über den Beträgen der Testwerte eine Ausgleichsgerade, insbesondere mit Hilfe der Methode der kleinsten Quadrate, eingepasst wird, wobei die Ausgleichsgerade den Verlauf der statistischen Sensorgenauigkeit des zumindest einen Sensors in Abhängigkeit der Bewegungsgröße angibt.

Darüber hinaus wird es als vorteilhaft angesehen, wenn die Differenz aus dem Wert der Bewegungsgröße und dem voraussichtlichen Wert der Bewegungsgröße als Innovationswert bestimmt wird.

Dann ist vorzugsweise vorgesehen, dass
- anhand des auf einen vorhergehenden Systemzustandsgenauigkeitswert angewandten Bewegungsmodells sowie eines auf ein vorgegebenes Systemrauschen angewandtes Übertragungsmodells ein Systemzustandsgenauigkeitswert des voraussichtlichen Systemzustands ermittelt wird,
- anhand des Systemzustandsgenauigkeitswertes des voraussichtlichen Systemzustands und des Transfermodells ein Genauigkeitswert des voraussichtlichen Wertes der Bewegungsgröße ermittelt wird,
- die Summe aus dem Genauigkeitswert des voraussichtlichen Wertes der Bewegungsgröße und dem Sensorgenauigkeitswert als Innovationsgenauigkeitswert bestimmt wird und
- der Quotient aus dem Betrag des Innovationswertes und dem Innovationsgenauigkeitswert als der Testgrößenwert bestimmt wird.

Und es ist vorzugsweise vorgesehen, dass
- als Produkt aus dem Innovationswert und einem vorgegebenen Gewichtungsfaktor ein Residualwert ermittelt wird,
- als Produkt aus dem mit minus eins multiplizierten Gewichtungsfaktor und dem Sensorgenauigkeitswert ein Residualgenauigkeitswert bestimmt wird, und
- der Quotient aus dem Betrag des Residualwertes und dem Residualgenauigkeitswert als der zusätzliche Testgrößenwert bestimmt wird.

Zum einen wird es als vorteilhaft angesehen, wenn die eine Testschranke vorzugsweise als Quantil der Standardnormalverteilung der Ordnung 1-α/2 bestimmt wird, wobei für α als Irrtumswahrscheinlichkeit ein Wert vorgegeben wird.

Zum anderen wird es als vorteilhaft angesehen, wenn die zusätzliche Testschranke vorzugsweise als Quantil der Standardnormalverteilung der Ordnung 1-α/2 bestimmt wird, wobei für α als Irrtumswahrscheinlichkeit ein zusätzlicher Wert vorgegeben wird.

Die Erfindung wird im Weiteren anhand der Figuren näher erläutert. Dabei zeigen die
Figur 1 ein erfindungsgemäßes bodengebundenes Fahrzeug mit einer erfindungsgemäßen Anordnung zum Erkennen von systematischen Abweichungen beim Bestimmen einer Bewegungsgröße des Fahrzeugs,
Figur 2 ein Ablaufdiagramm eines ersten Teilverfahrens eines erfindungsgemäßen Verfahrens zum Erkennen von systematischen Abweichungen beim Bestimmen der Bewegungsgröße des Fahrzeugs und
Figuren 3 bis 6 Ablaufdiagramme von vier Ausführungsformen eines zweiten Teilverfahrens des erfindungsgemäßen Verfahrens und
Figuren 7 und 8 Teilschritte von in den Figuren 3 bis 6 gezeigten Verfahrensschritten

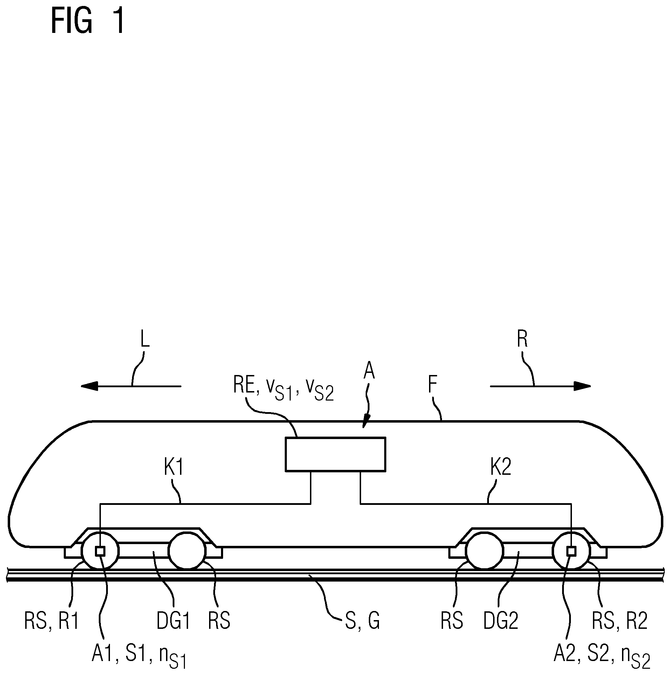

Die Figur 1 zeigt ein bodengebundenes Fahrzeug F in Form eines schienengebundenen Fahrzeugs. Das Fahrzeug F ist beispielsweise eine Lokomotive. Das Fahrzeug F kann sich in üblicher Weise auf den Schienen S eines Gleises G in den Fahrtrichtungen L und R bewegen. Es weist Drehgestelle DG1, DG2 mit jeweils zwei Radsätzen RS auf.

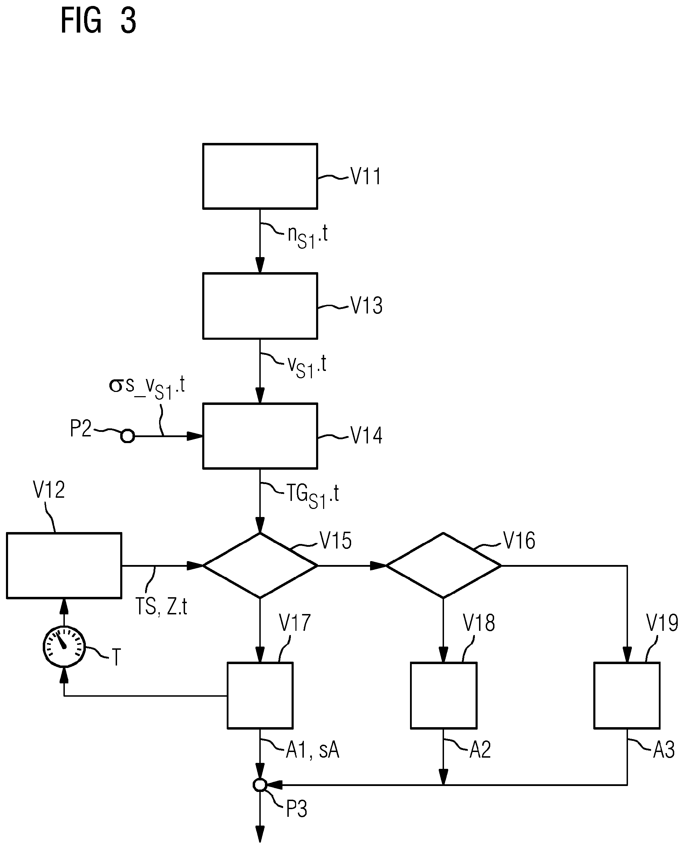

Im gezeigten Ausführungsbeispiel erfolgt das Erkennen systematischer Abweichungen unter Nutzung von zwei Sensoren S1 und S2, bei welchen es sich um Weginkrementalgeber des gleichen Sensortyps handelt. Die beiden Sensoren S1 und S2 können also beispielsweise vom Sensortyp "Hasler^{®} OPG" der Sécheron Hasler Group sein. Alternativ können die beiden Sensoren beispielsweise vom Sensortyp "BMIV" der Firma Baumer Electric sein. Es sei aber angemerkt, dass für das Ausführen des erfindungsgemäßen Verfahrens auch ein einziger Sensor, beispielsweise der Sensor S1 ausreicht, wie dies im Weiteren insbesondere auch im Zusammenhang mit den Erläuterungen zu der Figur 3 ersichtlich wird.

Einer der beiden Sensoren, welche mit S1 bezeichnet ist, ist einer Achse A1 eines der Radsätze RS des einen Drehgestells DG1 zugeordnet und der weitere Sensor, welche mit S2 bezeichnet ist, ist einer Achse A2 eines der Radsätze RS des weiteren Drehgestells DG2 zugeordnet.

Eine Recheneinheit RE ist über Kommunikationspfade K1 und K2 mit den Sensoren S1 und S2 verbunden. Außerdem ist ein Timer als Bestandteil der Recheneinheit RE vorgesehen. Der Timer T könnte aber auch separat zu der Recheneinheit RE ausgebildet und über einen geeigneten Kommunikationspfad mit der Recheneinheit RE verbunden sein.

Der erste Sensor S1 dient zum Erfassen von Messwerten n_{S1} der Achsdrehzahl der Achse A1 des einen Drehgestells DG1, anhand welcher die Recheneinheit RE in bekannter Weise, nämlich unter Berücksichtigung eines Raddurchmessers eines auf der Achse A1 befestigten Rades R1, Geschwindigkeitswerte v_{S1} des Fahrzeugs F als Werte der Bewegungsgröße v bestimmt. Die Geschwindigkeit v des Fahrzeugs F bildet hier also die Bewegungsgröße.

In gleicher Weise dient der zweite Sensor zum Erfassen von weiteren Messwerten n_{S2} der Achsdrehzahl der Achse A2 des weiteren Drehgestells DG2, anhand welcher die Recheneinheit RE unter Berücksichtigung eines Raddurchmessers R2 eines auf der Achse A2 befestigten Rades weitere Geschwindigkeitswerte v_{S2} des Fahrzeugs F als weitere Werte der Bewegungsgröße v bestimmt. Die Geschwindigkeit v des Fahrzeugs F bildet also auch hier die Bewegungsgröße.

Die Messwerte n_{S1} des ersten Sensors gelangen über den einen Kommunikationspfad K1 zu der Recheneinheit RE und die weiteren Messwerte n_{S2} gelangen über den weiteren Kommunikationspfad K2 zu der Recheneinheit RE.

Es könnte jedoch auch vorgesehen sein, dass eine Sensorrecheneinheit des Sensors S1 aus den Messwerten n_{S1} der Achsdrehzahl der Achse A1 die Geschwindigkeitswerte v_{S1} des Fahrzeugs F selbst bestimmt und diese über den Kommunikationspfade K1 an die Recheneinheit RE ausgibt und dass in entsprechender Weise eine weitere Sensorrecheneinheit des Sensors S2 aus den Messwerten n_{S2} der Achsdrehzahl der Achse A2 die Geschwindigkeitswerte v_{S2} des Fahrzeugs F selbst bestimmt und diese über den weiteren Kommunikationspfade K2 an die Recheneinheit RE ausgibt.

Die Sensoren S1 und S2, die Recheneinheit RE mit ihrem Timer T und die Kommunikationspfade K1 und K2 bilden zusammen die Anordnung A, welche zum Erkennen von systematischen Abweichungen sA beim Bestimmen der Bewegungsgröße v des Fahrzeugs F geeignet ausgebildet ist. Die Anordnung ist insbesondere zur Durchführung des im Folgenden beschriebenen Verfahrens geeignet ausgebildet, welches sich in zwei Teilverfahren gliedert.

Durch ein erstes der beiden Teilverfahren, wird zunächst eine typische zufällige Fehlercharakteristik für jeden der verwendeten Sensoren S1 und S2 zuverlässig bestimmt.

Daran schließt sich das zweite Teilverfahren an, welches die einmal für einen jeweiligen der Sensoren S1 und S2 aufgestellte typische zufällige Fehlercharakteristik nutzt um signifikante systematische Fehlereinflüsse aufzudecken; also um systematische Abweichungen (Effekte) zuverlässig von zufälligen Abweichungen (Effekten) zu unterscheiden.

Alternativ hierzu könnte auch nur eine typische zufällige Fehlercharakteristik des verwendeten Sensortyps der beiden Sensoren und bei Einsatz von Sensoren unterschiedlichen Sensortyps eine typische zufällige Fehlercharakteristik für jeden der unterschiedlichen Sensortypen bestimmt werden.

Außerdem funktioniert das Verfahren auch sehr effizient, wenn nur ein Sensor oder wenn beliebig vielen Sensoren gleichzeitig zum Einsatz kommen.

Außerdem könnte anstelle des Sensors S1 auch ein Testsensor des gleichen Sensortyps wie der Sensor S1 und /oder anstelle des weiteren Sensors S2 auch ein weiterer Testsensor des gleichen Sensortyps wie der weitere Sensor S2 verwendet werden.

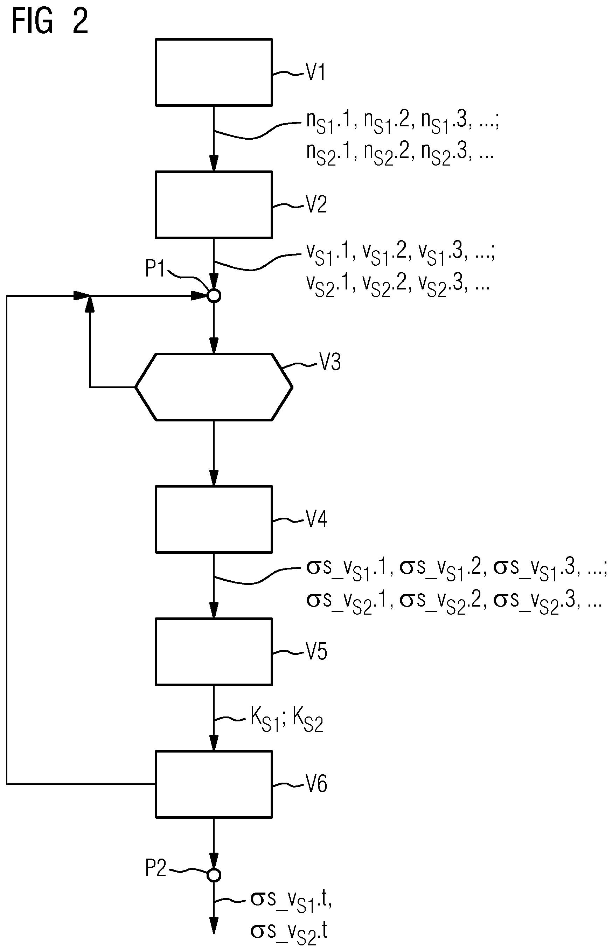

Gemäß Figur 2 umfasst das erste der beiden Teilverfahren, welches im Weiteren auch als Kalibrierungsmethode oder Autokalibrierungsmethode bezeichnet ist, im Wesentlichen die folgenden Verfahrensschritte:
Zunächst werden bei einer realen Testfahrt des Fahrzeugs F in einem Verfahrensschritt V1 mittels des einen Sensors S1 jeweils Testmesswerte n_{S1}.1, n_{S1}.2, n_{S1}.3, ... der Achsdrehzahl n_{S1} und mittels des weiteren Sensors S2 jeweils weitere Testmesswerte n_{S2}.1, n_{S2}.2, n_{S2}.3, ... der Achsdrehzahl n_{S2} erfasst. Bei dieser Testfahrt wird die Geschwindigkeit, welche hier die Bewegungsgröße v des Fahrzeugs bildet, insbesondere durch vorsichtiges Beschleunigen und vorsichtiges Abbremsen, derart geändert, dass ein Rutschen der Räder des Fahrzeugs F auf dem Boden bzw. hier speziell auf den Schienen S des Gleises G im Wesentlichen vermieden ist.

Bei der Testfahrt könnte es sich auch um eine simulierte Testfahrt handeln. Alternativ hierzu könnten derartige Testmesswerte auch bei einer realen oder simulierten Testfahrt eines an Stelle des Fahrzeugs F verwendeten Testfahrzeugs erfasst werden.

Eine hier nicht gezeigte Sensorrecheneinheit des Sensors S1 oder die Recheneinheit RE bestimmt dann in einem hier mit V2 bezeichneten Verfahrensschritt anhand der Testmesswerte n_{S1}.1, n_{S1}.2, n_{S1}.3, ... Testwerte v_{S1}.1, v_{S1}.2, v_{S1}.3, ... der Bewegungsgröße v. Außerdem bestimmt eine hier nicht gezeigte weitere Sensorrecheneinheit des weiteren Sensors S2 oder die Recheneinheit RE anhand der weiteren Testmesswerte n_{S2}.1, n_{S2}.2, n_{S2}.3, ... weitere Testwerte v_{S2}.1, v_{S2}.2, v_{S2}.3, ... der Bewegungsgröße v.

Anschließend wird dann durch die Recheneinheit RE aus den Testwerten v_{S1}.1, v_{S1}.2, v_{S1}.3, ... für den einen Sensor S1 ein Verlauf seiner statistischen Sensorgenauigkeit σs_v_{S1} in Abhängigkeit der Bewegungsgröße v in Form einer Sensorkennlinie K_{S1} bestimmt. Entsprechend wird durch die Recheneinheit RE aus den weiteren Testwerten v_{S2}.1, v_{S2}.2, v_{S2}.3, ... für den weiteren Sensor S2 ein Verlauf seiner statistischen Sensorgenauigkeit σs_v_{S2} in Abhängigkeit der Bewegungsgröße v in Form einer weiteren Sensorkennlinie K_{S2} bestimmt.

Anstelle der Sensorkennlinien K_{S1}, K_{S2}. könnten auch Sensorfunktionen bestimmt werden, welche die Sensorkennlinien K_{S1}, K_{S2} repräsentieren.

Die Recheneinheit RE prüft dazu zunächst in einem hier mit V3 bezeichneten Verfahrensschritt, ob das Fahrzeug bei der Testfahrt mindestens drei Beschleunigungs- und Entschleunigungsphasen durchlaufen hat und ob es zwischen diesen Phasen jeweils einen Stop von mindestens 3s eingelegt hat. Ist dies nicht der Fall, muss sie Testfahrt fortgesetzt werden, bis diese Bedingungen erfüllt sind. Ist dies der Fall, so führt die Recheneinheit den hier mit V4 bezeichneten nächsten Verfahrensschritt durch.

In dem Verfahrensschritt V4 bildet die Recheneinheit RE mittels einer Tiefpassfilterung aus den Testwerten v_{S1}.1, v_{S1}.2, v_{S1}.3, ... des zumindest einen Sensors S1 bzw. des an seiner statt verwendeten Testsensors zunächst Tiefpassfilterwerte. Anschließend bestimmt die Recheneinheit RE zu jedem der Testwerte v_{S1}.1, v_{S1}.2, v_{S1}.3, ... auf der Basis der Tiefpassfilterwerte eine gleitende Standardabweichung σs_vₛ₁.1, σs_v_{S1}.2, σs_v_{S1}.3, .... Entsprechend bildet die Recheneinheit RE in dem Verfahrensschritt V4 mittels einer Tiefpassfilterung aus den Testwerten v_{S2}.1, v_{S2}.2, v_{S2}.3, ... des zumindest einen weiteren Sensors S2 bzw. des an seiner statt verwendeten weiteren Testsensors zunächst weitere Tiefpassfilterwerte. Anschließend bestimmt die Recheneinheit RE zu jedem der weiteren Testwerte v_{S2}.1, v_{S2}.2, v_{S2}.3, ... auf der Basis der weiteren Tiefpassfilterwerte eine weitere gleitende Standardabweichung σs_v_{S2}.1 , σs_v_{S2}.2, σs_v_{S2}.3, ....

In einem hier mit V5 bezeichneten Verfahrensschritt passt die Recheneinheit RE in eine Darstellung der gleitenden Standardabweichungen σs_v_{S1}.1, σs_v_{S1}.2, σs_v_{S1}.3, ... über den Beträgen |v_{S1}.1|, |v_{S1}.2|, |v_{S1}.3|, ...; der Testwerte v_{S1}.1, v_{S1}.2, v_{S1}.3, ... eine Ausgleichsgerade als Sensorkennlinie K_{S1} ein. Das Einpassen der Ausgleichsgerade erfolgt insbesondere mit Hilfe der an sich bekannten Methode der kleinsten Quadrate. Die Ausgleichsgerade gibt den Verlauf der statistischen Sensorgenauigkeit σs_v_{S1} des einen Sensors S1 in Abhängigkeit der Bewegungsgröße v an. Entsprechend passt die Recheneinheit RE in eine Darstellung der weiteren gleitenden Standardabweichungen σs_v_{S2}.1, σs_v_{S2}.2, σₛ_v_{S2}.3, ... über den Beträgen |v_{S2}.1|, |v_{S2}.2|, |v_{S2}.3|, ...; der Testwerte v_{S2}.1, v_{S2}.2, v_{S2}.3, ... eine weitere Ausgleichsgerade als Sensorkennlinie K_{S2} ein. Auch das Einpassen der weiteren Ausgleichsgerade erfolgt insbesondere mit Hilfe der an sich bekannten Methode der kleinsten Quadrate. Diese weitere Ausgleichsgerade gibt den Verlauf der statistischen Sensorgenauigkeit σs_v_{S2} des weiteren Sensors S2 in Abhängigkeit der Bewegungsgröße v an.

In einem hier mit V6 bezeichneten Verfahrensschritt werden die eine Sensorkennlinie K_{S1} und die weitere Sensorkennlinie K_{S2} neben zusätzlichen Angaben in einem Speicher der Recheneinheit RE abgespeichert.

Die Recheneinheit führt also die Verfahrensschritte V4, V5 und V6 zeitgleich oder zeitversetzt sowohl für die Testwerte v_{S1}.1, v_{S1}.2, v_{S1}.3, ... des Sensors S1 auch für die weiteren Testwerte v_{S2}.1, v_{S2}.2, v_{S2}.3, ... des weiteren Sensors S2 durch.

Gemäß Figur 3 umfasst eine erste Ausführungsform des zweiten der beiden Teilverfahren im Wesentlichen die folgenden Verfahrensschritte:
In einem hier mit V11 bezeichneten Verfahrensschritt erfasst der Sensor S1 einen dem Zeitpunkt t zugeordneten Messwert n_{S1}.t der Achsdrehzahl n_{S1} der Achse A1 des einen Drehgestells DG1.

Außerdem wird in einem hier mit V12 bezeichneten Verfahrensschritt der Betriebszustand Z.t des Timers T zum Zeitpunkt t ausgelesen. Der Timer T kann zwei Betriebszustände einnehmen. Ist er gestartet und läuft, so befindet er sich in einem aktiven Betriebszustand. Läuft er nicht, so befindet er sich in einem passiven Betriebszustand. Der Timer wird immer dann gestartet beziehungsweise erneut gestartet, sobald durch die Recheneinheit RE eine Annahme A1 getroffen wurde, dass eine systematische Abweichung sA vorliegt.

In dem Verfahrensschritt V12 wird auch eine Testschranke TS vorgegeben. Vorzugsweise wird diese Testschranke TS als Quantil der Standardnormalverteilung der Ordnung 1-α/2 bestimmt. Dabei wird für α als Irrtumswahrscheinlichkeit ein Wert Wα vorgegeben. Dieser Wert Wα kann in einem hier nicht gezeigten Speicher der Recheneinheit RE abgelegt sein.

In einem hier mit V13 bezeichneten Verfahrensschritt bestimmt die Recheneinheit RE anhand des Messwertes n_{S1}.t und unter Berücksichtigung des Raddurchmessers des auf der Achse A1 befestigten Rades R1 einen dem Zeitpunkt t zugeordneten Wert v_{S1}.t der Bewegungsgröße v.

In einem hier mit V14 bezeichneten Verfahrensschritt wird anhand der zuvor für den zumindest einen Sensor S1 ermittelten Sensorkennlinie K_{S1} ein statistischer Sensorgenauigkeitswert σs_v_{S1}.t für den Werte v_{S1}.t der Bewegungsgröße v bestimmt, indem dieser statistische Sensorgenauigkeitswert σs_v_{S1}.t an der hier mit P2 bezeichneten Schnittstelle aus dem nicht gezeigten Speicher der Recheneinheit RE ausgelesen wird.

Außerdem wird in dem Verfahrensschritt V14 in Abhängigkeit des dem Zeitpunkt t zugeordneten Wertes v_{S1}.t der Bewegungsgröße v und des für diesen Wert v_{S1}.t bestimmten statistischen Sensorgenauigkeitswertes σs_v_{S1}.t des Sensors S1 ein dem Zeitpunkt t zugeordneter Testgrößenwert TG_{S1}.t gebildet.

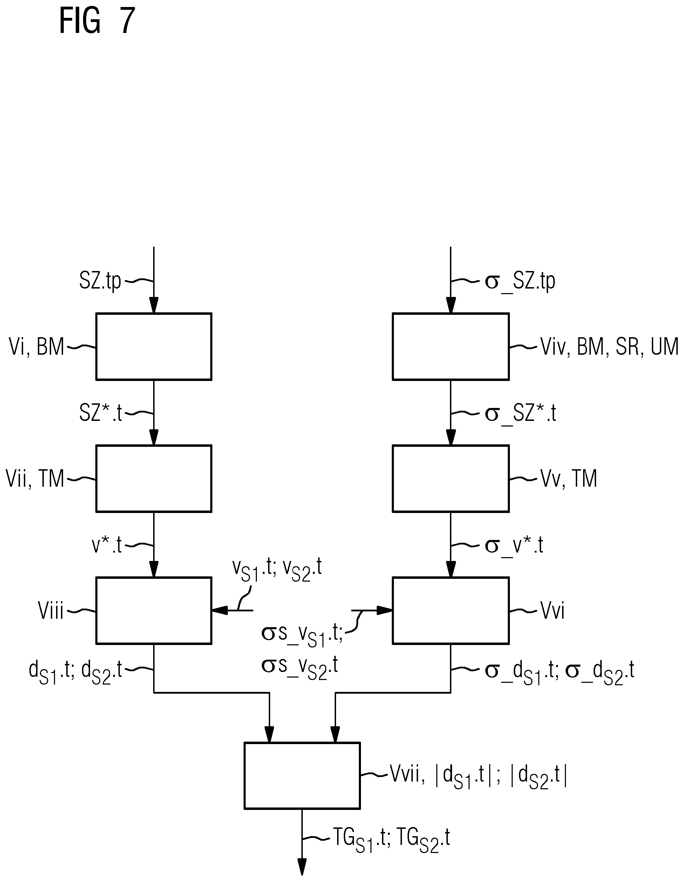

Die Bildung des Testgrößenwert TG_{S1}.t erfolgt gemäß der Figur 7 in den folgenden Teilschritten Vi bis Vvii des Verfahrensschrittes V14.

In einem hier mit Vi bezeichneten Teilschritt wird anhand eines auf einen vorhergehenden Systemzustand SZ.tp des Fahrzeugs F angewandten Bewegungsmodells BM ein voraussichtlicher Systemzustand SZ*.t des Fahrzeugs F für den Zeitpunkt t ermittelt.

In einem hier mit Vii bezeichneten Teilschritt wird anhand eines auf den voraussichtlichen Systemzustand SZ*.t angewandten Transfermodell TM ein voraussichtlicher Wert v*.t der Bewegungsgröße v für den Zeitpunkt t ermittelt.

In einem hier mit Viii bezeichneten Teilschritt wird die Differenz aus dem Wert v_{S1}.t der Bewegungsgröße v und dem voraussichtlichen Wert v*.t der Bewegungsgröße v als Innovationswert d_{S1}.t bestimmt.

In einem hier mit Viv bezeichneten Teilschritt wird anhand des auf einen vorhergehenden Systemzustandsgenauigkeitswert σ_SZ.tp angewandten Bewegungsmodells BM sowie eines auf ein vorgegebenes Systemrauschen SR angewandtes Übertragungsmodells UM ein Systemzustandsgenauigkeitswert σ_SZ*.t des voraussichtlichen Systemzustands SZ*.t ermittelt.

In einem hier mit Vv bezeichneten Teilschritt wird anhand des Systemzustandsgenauigkeitswertes o_SZ*.t des voraussichtlichen Systemzustands SZ*.t und des Transfermodells TM ein Genauigkeitswert σ**_** v*.t des voraussichtlichen Wertes v*.t der Bewegungsgröße v ermittelt.

In einem hier mit Vvi bezeichneten Teilschritt wird die Summe aus dem Genauigkeitswert σ_ v*.t des voraussichtlichen Wertes v*.t der Bewegungsgröße v und dem Sensorgenauigkeitswert σs_v_{S1}.t als Innovationsgenauigkeitswert σ_d_{S1}.t bestimmt.

Und einem hier mit Vvii bezeichneten Teilschritt wird der Quotient aus dem Betrag |d_{S1}.t| des Innovationswertes d_{S1}.t und dem Innovationsgenauigkeitswert σ_d_{S1}.t als der Testgrößenwert TG_{S1}.t bestimmt.

Nach der Bildung des Testgrößenwertes TG_{S1}.t wird nunmehr in dem in der Figur 3 mit V15 bezeichneten Verfahrensschritt bei einem Vergleich der Testgrößenwert TG_{S1}.t mit der vorgegebenen Testschranke TS vergleichen, um in Abhängigkeit eines bei dem Vergleich gewonnenen Vergleichsergebnisses eine Annahme A1, A2 oder A3 hinsichtlich eines Vorliegens einer systematischen Abweichung sA zu treffen.

In dem mit V16 bezeichneten Verfahrensschritt wird geprüft, ob der Timer T läuft.

Die Annahme hinsichtlich des Vorliegens einer systematischen Abweichung (sA) wird wie in dem folgt getroffen:
- wenn der dem Zeitpunkt t zugeordnete Testgrößenwert TG_{S1}.t größer als die vorgegebene Testschranke TS ist, dann wird in dem mit V17 bezeichneten Verfahrensschritt das Vorliegen einer systematischen Abweichung sA zu dem Zeitpunkt t angenommen und der Timer T wird gestartet beziehungsweise neu gestartet,
- wenn der Testgrößenwert TG_{S1}.t kleiner als die vorgegebene Testschranke TS ist und außerdem der Timer T läuft, dann wird in dem mit V18 bezeichneten Verfahrensschritt das Vorliegen einer systematischen Abweichung sA zu dem Zeitpunkt t nicht ausgeschlossen, und
- wenn der Testgrößenwert TG_{S1}.t kleiner als die vorgegebene Testschranke TS ist und außerdem der Timer T nicht läuft, dann wird in dem mit V19 bezeichneten Verfahrensschritt das Vorliegen einer systematischen Abweichung sA zu dem Zeitpunkt t ausgeschlossen.

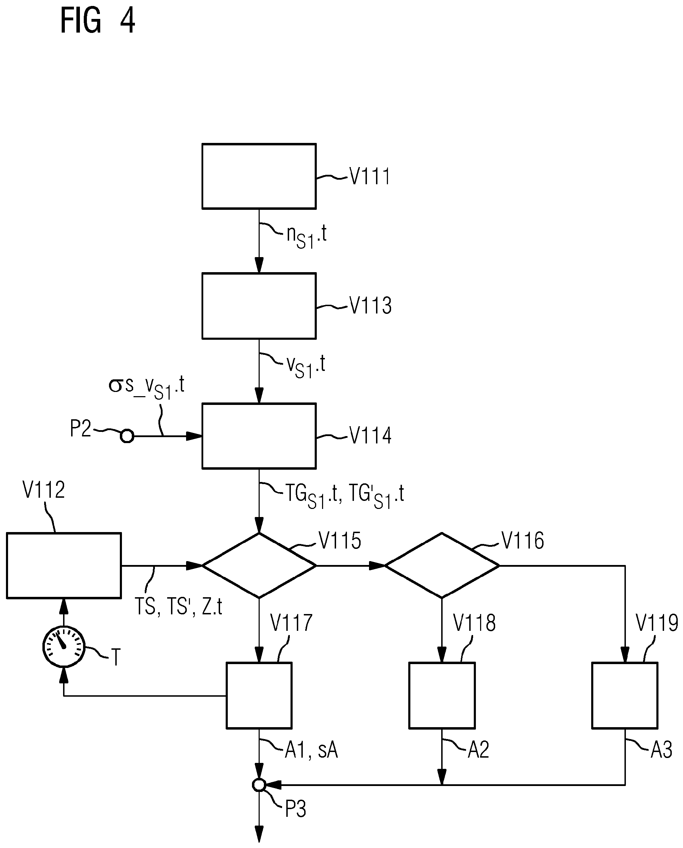

Gemäß Figur 4 umfasst eine zweite Ausführungsform des zweiten der beiden Teilverfahren im Wesentlichen die folgenden Verfahrensschritte:
In einem hier mit V111 bezeichneten Verfahrensschritt erfasst der Sensor S1 einen dem Zeitpunkt t zugeordneten Messwert n_{S1}.t der Achsdrehzahl n_{S1} der Achse A1 des einen Drehgestells DG1.

Außerdem wird in einem hier mit V112 bezeichneten Verfahrensschritt der Betriebszustand Z.t des Timers T zum Zeitpunkt t ausgelesen. Der Timer T kann zwei Betriebszustände einnehmen. Ist er gestartet und läuft, so befindet er sich in einem aktiven Betriebszustand. Läuft er nicht, so befindet er sich in einem passiven Betriebszustand. Der Timer wird immer dann gestartet beziehungsweise erneut gestartet, sobald durch die Recheneinheit RE eine Annahme A1 getroffen wurde, dass eine systematische Abweichung sA vorliegt.

In dem Verfahrensschritt V112 werden auch eine Testschranke TS und eine zusätzlichen Testschranke TS'vorgegeben. Vorzugsweise wird die Testschranke TS wieder als Quantil der Standardnormalverteilung der Ordnung 1-α/2 bestimmt und für α als Irrtumswahrscheinlichkeit ein Wert Wα vorgegeben. Auch die zusätzliche Testschranke TS' wird vorzugsweise als Quantil der Standardnormalverteilung der Ordnung 1-α/2 bestimmt, wobei für α als Irrtumswahrscheinlichkeit ein zusätzlicher Wert W'α vorgegeben wird. Die Werte Wα und W'α können wieder in einem Speicher der Recheneinheit RE abgelegt sein.

In dem hier mit V113 bezeichneten Verfahrensschritt bestimmt die Recheneinheit RE anhand des Messwertes n_{S1}.t und unter Berücksichtigung des Raddurchmessers des auf der Achse A1 befestigten Rades R1 einen dem Zeitpunkt t zugeordneten Wert V_{S1}.t der Bewegungsgröße v.

In dem hier mit V114 bezeichneten Verfahrensschritt wird anhand der zuvor für den zumindest einen Sensor S1 ermittelten Sensorkennlinie K_{S1} ein statistischer Sensorgenauigkeitswert σs_v_{S1}.t für den Werte V_{S1}.t der Bewegungsgröße v bestimmt, indem dieser statistische Sensorgenauigkeitswert σs_V_{S1}.t an der hier mit P2 bezeichneten Schnittstelle aus dem nicht gezeigten Speicher der Recheneinheit RE ausgelesen wird.

Außerdem wird in dem Verfahrensschritt V114 in Abhängigkeit des dem Zeitpunkt t zugeordneten Wertes v_{S1}.t der Bewegungsgröße v und des für diesen Wert v_{S1}.t bestimmten statistischen Sensorgenauigkeitswertes σs_v_{S1}.t des Sensors S1 ein dem Zeitpunkt t zugeordneter Testgrößenwert TG_{S1}.t gebildet.

Die Bildung des Testgrößenwert TG_{S1}.t erfolgt wieder gemäß der Figur 7 in den Teilschritten Vi bis Vvii.

In dem Verfahrensschritt V114 wird ferner ein dem Zeitpunkt t zugeordneter zusätzliche Testgrößenwertes TG'_{S1}.t gebildet.

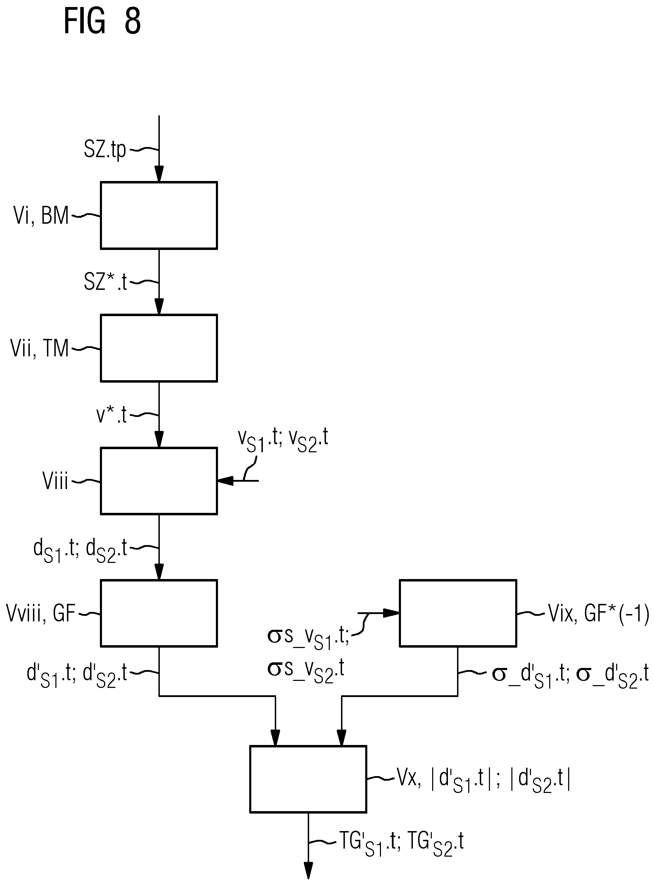

Gemäß der Figur 8 dienen zur Bildung des zusätzliche Testgrößenwertes TG'_{S1}.t zunächst die schon aus Figur 7 bekannten Teilschritte Vi, Vii und Viii, an welche sich die Teilschritte Vviii, Vix und Vx anschließen.

In dem hier mit Vviii bezeichneten Teilschritt wird als Produkt aus dem Innovationswert d_{S1}.t und einem vorgegebenen Gewichtungsfaktor GF ein Residualwert d'_{S1}.t ermittelt.

In dem hier mit Vix bezeichneten Teilschritt wird als Produkt aus dem mit minus eins multiplizierten Gewichtungsfaktor GF und dem Sensorgenauigkeitswert σs_v_{S1}.t ein Residualgenauigkeitswert σ_d'_{S1}.t bestimmt.

Und in dem hier mit Vx bezeichneten Teilschritt wird der Quotient aus dem Betrag |d'_{S1}.t| des Residualwertes d'_{S1}.t und dem Residualgenauigkeitswert σ_d'_{S1}.t als der zusätzliche Testgrößenwert TG'_{S1.}t bestimmt.

Nach der Bildung des Testgrößenwertes TG_{S1}.t und des zusätzlichen Testgrößenwertes TG'_{S1}.t wird nunmehr in dem in der Figur 4 mit V115 bezeichneten Verfahrensschritt bei einem Vergleich der Testgrößenwert TG_{S1}.t mit der vorgegebenen Testschranke TS verglichen. Außerdem wird bei einem zusätzlichen Vergleich der zusätzliche Testgrößenwert TG'_{S1}.t mit der vorgegebenen zusätzlichen Testschranke TS' verglichen.

In dem mit V116 bezeichneten Verfahrensschritt wird wieder geprüft, ob der Timer T läuft.

Die Annahme hinsichtlich des Vorliegens einer systematischen Abweichung sA wird wie in dem folgt getroffen:
- wenn der dem Zeitpunkt t zugeordnete Testgrößenwert TG_{S1}.t größer als die vorgegebene Testschranke TS ist und/oder wenn der zusätzliche Testgrößenwert TG'_{S1}.t größer als die vorgegebene zusätzliche Testschranke TS' ist, dann wird in dem Verfahrensschritt V117 das Vorliegen einer systematischen Abweichung sA zu dem Zeitpunkt t angenommen und der Timer wird gestartet beziehungsweise erneut gestartet,
- wenn einerseits der Testgrößenwert TG_{S1}.t kleiner als die vorgegebene Testschranke TS sowie andererseits der zusätzliche Testgrößenwert TG'_{S1}.t kleiner als die vorgegebene zusätzliche Testschranke TS' ist und außerdem der Timer T läuft, dann wird in dem Verfahrensschritt V118 das Vorliegen einer systematischen Abweichung sA zu dem Zeitpunkt t nicht ausgeschlossen,
- wenn einerseits der Testgrößenwert TG_{S1}.t kleiner als die vorgegebene Testschranke TS sowie andererseits der zusätzliche Testgrößenwert TG'_{S1}.t kleiner als die vorgegebene zusätzliche Testschranke TS' ist und außerdem der Timer T nicht läuft, dann wird in dem Verfahrensschritt V119 das Vorliegen einer systematischen Abweichung sA zu dem Zeitpunkt t ausgeschlossen.

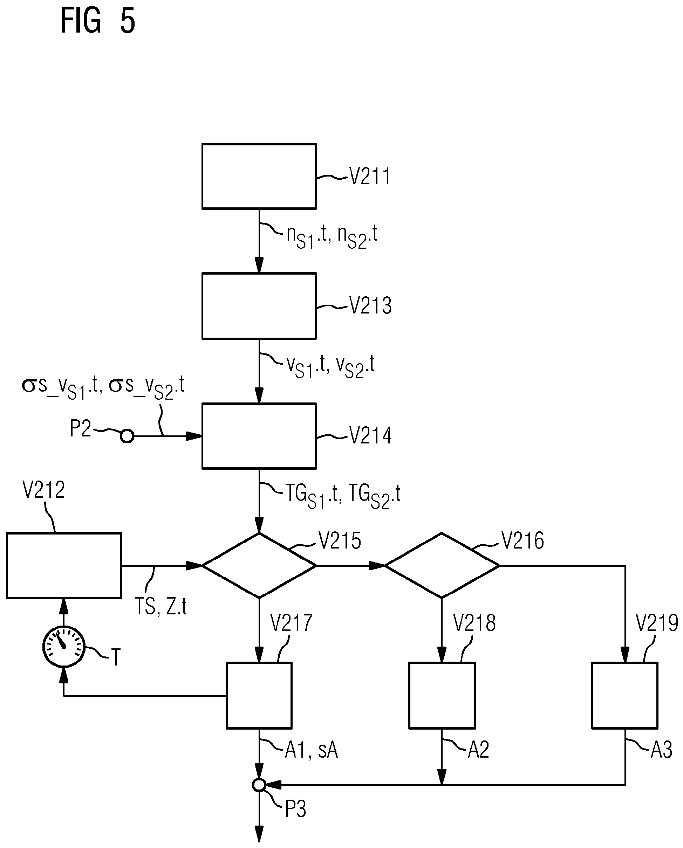

Die Figur 5 zeigt eine dritte Ausführungsform des zweiten der beiden Teilverfahren. Diese kommt dann zur Anwendung, wenn der weiterer Sensor S2 einen dem Zeitpunkt t zugeordneten weiteren Messwert n_{S2}.t bereitstellt.

Dann werden die folgenden Verfahrensschritte durchgeführt:
In dem hier mit V211 bezeichneten Verfahrensschritt erfasst der Sensor S1 einen dem Zeitpunkt t zugeordneten Messwert n_{S1}.t der Achsdrehzahl n_{S1} der Achse A1 des einen Drehgestells DG1. Und der Sensor S2 erfasst einen dem Zeitpunkt t zugeordneten weiteren Messwert n_{S2}.t der Achsdrehzahl n_{S2} der Achse A2 des Drehgestells DG2

In einem hier mit V212 bezeichneten Verfahrensschritt wird der Betriebszustand Z.t des Timers T zum Zeitpunkt t ausgelesen. Der Timer T kann wieder zwei Betriebszustände einnehmen. Ist er gestartet und läuft, so befindet er sich in einem aktiven Betriebszustand. Läuft er nicht, so befindet er sich in einem passiven Betriebszustand. Der Timer wird auch hier immer dann gestartet beziehungsweise erneut gestartet, sobald durch die Recheneinheit RE eine Annahme A1 getroffen wurde, dass eine systematische Abweichung sA vorliegt.

In dem Verfahrensschritt V212 wird auch wieder eine Testschranke TS vorgegeben. Vorzugsweise wird diese Testschranke TS als Quantil der Standardnormalverteilung der Ordnung 1-α/2 bestimmt. Dabei wird für α als Irrtumswahrscheinlichkeit ein Wert Wα vorgegeben. Dieser Wert Wα kann in einem hier nicht gezeigten Speicher der Recheneinheit RE abgelegt sein.

In dem Verfahrensschritt V213 bestimmt die Recheneinheit RE anhand des Messwertes n_{S1}.t und unter Berücksichtigung des Raddurchmessers des auf der Achse A1 befestigten Rades R1 einen dem Zeitpunkt t zugeordneten Wert v_{S1}.t der Bewegungsgröße v. Außerdem bestimmt die Recheneinheit RE anhand des weiteren Messwertes n_{S2}.t und unter Berücksichtigung des Raddurchmessers des auf der Achse A2 befestigten Rades R2 einen dem Zeitpunkt t zugeordneten weiteren Wert v_{S2}.t der Bewegungsgröße v.

In einem hier mit V214 bezeichneten Verfahrensschritt wird anhand der zuvor für den einen Sensor S1 ermittelten Sensorkennlinie K_{S1} ein statistischer Sensorgenauigkeitswert σs_v_{S1}.t für den Werte v_{S1}.t der Bewegungsgröße v bestimmt, indem dieser statistische Sensorgenauigkeitswert σs_v_{S1}.t an der hier mit P2 bezeichneten Schnittstelle aus dem nicht gezeigten Speicher der Recheneinheit RE ausgelesen wird. Außerdem wird in dem Verfahrensschritt V214 anhand der zuvor für den weiteren Sensor S2 ermittelten Sensorkennlinie K_{S2} ein weiterer statistischer Sensorgenauigkeitswert σs_v_{S2}.t für den weiteren Wert v_{S2}.t der Bewegungsgröße v bestimmt, indem dieser weitere statistische Sensorgenauigkeitswert σs_v_{S2}.t an der Schnittstelle P2 aus dem nicht gezeigten Speicher der Recheneinheit RE ausgelesen wird.

In dem Verfahrensschritt V214 wird auch einerseits in Abhängigkeit des dem Zeitpunkt t zugeordneten Wertes v_{S1}.t der Bewegungsgröße v und des für diesen Wert v_{S1}.t bestimmten statistischen Sensorgenauigkeitswertes σs_v_{S1}.t des Sensors S1 ein dem Zeitpunkt t zugeordneter Testgrößenwert TG_{S1}.t gebildet. Andererseits wird in Abhängigkeit des dem Zeitpunkt t zugeordneten weiteren Wertes v_{S2}.t der Bewegungsgröße v und des für diesen weiteren Wert v_{S2}.t bestimmten weiteren statistischen Sensorgenauigkeitswertes σs_v_{S2}.t des weiteren Sensors S2 ein dem Zeitpunkt t zugeordneter weiterer Testgrößenwert TG_{S2}.t gebildet.

Die Bildung des Testgrößenwert TG_{S1}.t erfolgt in den Teilschritten Vi bis Vvii gemäß Figur 7.

Die Bildung des weiteren Testgrößenwertes TG_{S2}.t erfolgt gemäß der Figur 7 wie folgt:
In dem Teilschritt Viii wird die Differenz aus dem weiteren Wert v_{S2}.t der Bewegungsgröße v und dem voraussichtlichen Wert v*.t der Bewegungsgröße v als weiterer Innovationswert d_{S2}.t bestimmt.

In dem Teilschritt Vvi wird die Summe aus dem Genauigkeitswert σ_ v*.t des voraussichtlichen Wertes v*.t der Bewegungsgröße v und dem weiteren Sensorgenauigkeitswert σs_v_{S2}.t als weiterer Innovationsgenauigkeitswert σ_d_{S2}.t bestimmt.

Und In dem Teilschritt Vvii wird der Quotient aus dem Betrag |d_{S2}.t| des weiteren Innovationswertes d_{S2}.t und dem weiteren Innovationsgenauigkeitswert σ_d_{S2}.t als der weitere Testgrößenwert TG_{S2}.t bestimmt.

Nach der Bildung des Testgrößenwertes TG_{S1}.t und des weitere Testgrößenwert TG_{S2}.t wird nunmehr in dem in der Figur 5 mit V215 bezeichneten Verfahrensschritt bei einem Vergleich der Testgrößenwert TG_{S1}.t mit der vorgegebenen Testschranke TS verglichen. Außerdem wird bei einem zusätzlichen Vergleich der weitere Testgrößenwert TG_{S2}.t mit der vorgegebenen Testschranke TS verglichen.

In dem mit V216 bezeichneten Verfahrensschritt wird wieder geprüft, ob der Timer T läuft.

Die Annahme hinsichtlich des Vorliegens einer systematischen Abweichung sA wird wie in dem folgt getroffen:
- wenn der dem Zeitpunkt t zugeordnete Testgrößenwert TG_{S1}.t größer als die vorgegebene Testschranke TS ist und/oder wenn der dem Zeitpunkt t zugeordnete weitere Testgrößenwert TG_{S2}.t größer als die vorgegebene Testschranke TS ist, dann wird in dem Verfahrensschritt V217 das Vorliegen einer systematischen Abweichung sA zu dem Zeitpunkt t angenommen,
- wenn der dem Zeitpunkt t zugeordnete Testgrößenwert TG_{S1}.t und der dem Zeitpunkt t zugeordnete weitere Testgrößenwert TG_{S2}.t kleiner als die vorgegebene Testschranke TS sind und außerdem der Timer T läuft, dann wird in dem Verfahrensschritt V218 das Vorliegen einer systematischen Abweichung sA zu dem Zeitpunkt t nicht ausgeschlossen,
- wenn der dem Zeitpunkt t zugeordnete Testgrößenwert TG_{S1}.t und der dem Zeitpunkt t zugeordnete weitere Testgrößenwert TG_{S2}.t kleiner als die vorgegebene Testschranke TS sind und außerdem der Timer T nicht läuft, dann wird in dem Verfahrensschritt V219 das Vorliegen einer systematischen Abweichung sA zu dem Zeitpunkt t ausgeschlossen.

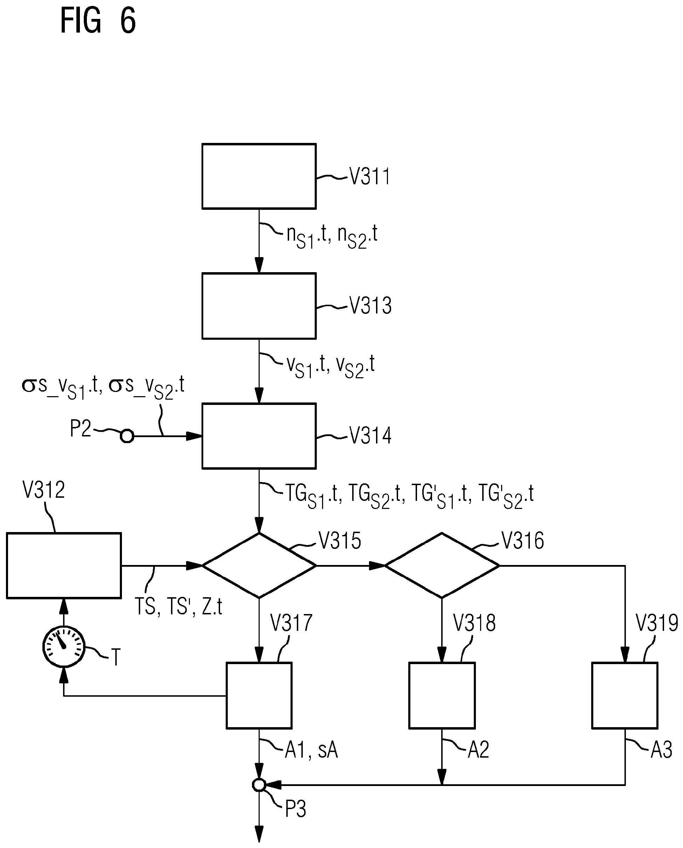

Die Figur 6 zeigt eine vierte Ausführungsform des zweiten der beiden Teilverfahren. Diese kommt zur Anwendung, wenn der weiterer Sensor S2 auch wieder einen dem Zeitpunkt t zugeordneten weiteren Messwert n_{S2}.t bereitstellt und wenn außerdem neben dem einen Testgrößenwert TG_{S1}.t ein zusätzlicher Testgrößenwert TG'_{S1}.t und neben dem weiteren Testgrößenwert TG_{S2}.t ein weiterer zusätzlicher Testgrößenwert TG'_{S2}.t bestimmt werden. Dabei wird dann entsprechend neben der einen Testschranke TS auch wieder eine zusätzliche Testschranke vorgegeben.

Die Annahme hinsichtlich des Vorliegens einer systematischen Abweichung sA wird dann wie in dem folgt getroffen:
- wenn zumindest eine der folgenden Bedingungen zutrifft:
   - der dem Zeitpunkt t zugeordnete Testgrößenwert TG_{S1}.t ist größer als die vorgegebene Testschranke TS,
   - der dem Zeitpunkt t zugeordnete weitere Testgrößenwert TG_{S2}.t ist größer als die vorgegebene Testschranke TS,
   - der dem Zeitpunkt t zugeordnete zusätzliche Testgrößenwert TG'_{S1}.t ist größer als die vorgegebene zusätzliche Testschranke TS',
   - der dem Zeitpunkt t zugeordnete zusätzliche weitere Testgrößenwert TG'_{S2}.t ist größer als die vorgegebene zusätzliche Testschranke TS',
dann wird in dem Verfahrensschritt V317 das Vorliegen einer systematischen Abweichung sA zu dem Zeitpunkt t angenommen,
- wenn einerseits der Testgrößenwert TG_{S1}.t und der weitere Testgrößenwert TG_{S2}.t kleiner als die vorgegebene Testschranke TS sind sowie andererseits der zusätzliche Testgrößenwert TG'_{S1}.t und der zusätzliche weitere Testgrößenwert TG'_{S2}.t kleiner als die vorgegebene zusätzliche Testschranke TS' sind und außerdem der Timer T läuft, dann wird in dem Verfahrensschritt V318 das Vorliegen einer systematischen Abweichung sA zu dem Zeitpunkt t nicht ausgeschlossen,
- wenn einerseits der Testgrößenwert TG_{S1}.t und der weitere Testgrößenwert TG_{S2}.t kleiner als die vorgegebene Testschranke TS sind sowie andererseits der zusätzliche Testgrößenwert TG'_{S1}.t und der zusätzliche weitere Testgrößenwert TG'_{S2}.t kleiner als die vorgegebene zusätzliche Testschranke TS' sind und außerdem der Timer T nicht läuft, dann wird in dem Verfahrensschritt V319 das Vorliegen einer systematischen Abweichung sA zu dem Zeitpunkt t ausgeschlossen.

Zusammenfassend kann also festgestellt werden, dass bei dem ersten der beiden Teilverfahren, welches auch als Kalibrierungsmethode bezeichnet werden kann, zumindest die folgenden Schritte vorgesehen sind, wenn die Geschwindigkeit des Fahrzeugs die Bewegungsgröße bildet:
- Fahren verschiedener Geschwindigkeiten, dabei vorsichtiges Beschleunigen und Bremsen des Fahrzeuges wenn die Geschwindigkeit geändert wird,
- Tiefpassfilterung der Messwerte,
- Berechnen der Genauigkeiten der verschiedenen Sensoren für die gesamte Fahrt und
- Iteratives Einpassen einer Ausgleichsgerade mit Hilfe der Methode der kleinsten Quadrate. Dabei Gleit- und Schleudervorgänge durch statistische Tests ausschließen und Berechnung der Ausgleichsgerade wiederholten. Solange durchführen bis keine systematischen Einflüsse vorhanden sind.

Das Ergebnis des ersten Teilverfahrens sind die Genauigkeiten der jeweiligen Sensoren.

Das zweite der beiden Teilverfahren, welches auch als Schlupund Gleiterkennungsmethode bezeichnet werden kann, umfasst dann beispielsweise die folgenden weiteren Schritte:
- Berechnung der voraussichtlichen Geschwindigkeit des Fahrzeuges zu dem Zeitpunkt des Eintreffens eines Messwertes (beispielsweise einer Weginkrementalgebermesswertes) mit Hilfe eines Bewegungsmodells (beispielsweise durch einen Erweiterten Kalman Filter),
- Berechnen der Differenz (hier vorzugsweise Geschwindigkeitsdifferenz) zwischen der berechneten voraussichtlichen Geschwindigkeit und der gemessenen Geschwindigkeit
- Berechnen der Genauigkeit der Geschwindigkeitsdifferenz
- Berechnen der Testschranke für eine vorgegebene Irrtumswahrscheinlichkeit alpha
- Berechnen des Testgrößenwertes
- Vergleich des Testgrößenwertes mit der Testschranke.

Ist der Testgrößenwert größer als die Testschranke so liegt ein systematischer Effekt z.B. Schleudern oder Gleiten vor.

Durch die Verwendung des Timers in der beschriebenen Weise wird verhindert, dass nicht fälschlicherweise eine Aussage getroffen wird, dass kein Schlupf bzw. kein Schleudern vorliegt, wenn dies doch der Fall ist.

Als wesentliche Vorteile des erfindungsgemäßen Verfahrens können die folgenden aufgezählt werden:
- Das Verfahren funktioniert unabhängig vom Fahrzeug (Fahrzeugtyp) zuverlässig und kann daher flexibel für die verschiedensten Fahrzeuge (Fahrzeugtypen) zur Erstinstallation oder Nachrüstung angeboten werden.
- Die für die Durchführung des Verfahrens geeignete Anordnung lässt sich leicht installieren (implementieren) bzw. nachinstallieren (Retrofit). Die Anordnung besteht aus sehr wenigen Bauteilen - ist also hinsichtlich ihrer Erstbeschaffung sehr kostensparend - und erfordert auch entsprechend geringe Wartungs- und Pflegekosten; auch hinsichtlich der Software der Recheneinheit, durch welche einzelne der Verfahrensschritte ausgeführt werden.
- Das Verfahren benötigt wenig Rechenleistung. Es werden maximal so viele Vergleiche ausgeführt, wie Sensoren vorhanden sind.
- Es können dynamisch beliebig viele Sensoren zugeschaltet oder abgeschaltet werden. An sich funktioniert das Verfahren bereits unter Einsatz eines Sensors. Vorteilhaft ist es aber, zumindest zwei Sensoren zu verwenden. Das Erkennen von Schlupf oder Schleudern basiert also vorzugsweise auf zumindest zwei beteiligten Sensoren. Dedizierte Prüfsensoren werden nicht benötigt. Beispielsweise ist es vorteilhaft, mindestens zwei Weginkrementalgebern an Zugachsen zu befestigen, die ausreichend verschiedenartig angesteuert werden oder bei denen der externe Einfluss durch die Umwelt in Kombination mit dem erfindungsgemäßen Verfahren zu ausreichend starker Variation in den berechneten Wegwerten der Sensoren untereinander führt. Das Verfahren kann aber prinzipiell beliebig viele Sensoren, insbesondere Weginkrementalgeber, wie sie momentan am Zug bereits vorhanden sind, nutzen. Anstelle der oder zusätzlich zu Weginkrementalgebern können in das erfindungsgemäße Verfahren auch sogenannte Absolutsensoren wie GNSS oder Dopplerradare eingebunden werden. Als Referenzsensoren werden Dopplerradare oder GNSS für die Verfahren aber nicht benötigt
- Die Eingangsgrößen für das Verfahren sind die Messwerte und deren Statistik. Fahrzeugtypische Eigenschaften müssen für das Verfahren nicht bekannt gemacht werden.
- Das Verfahren zeichnet sich durch eine sehr hohe Erkennungsrate von Gleit- und Schleuderschlupf aus; bisherige Tests zeigen eine Erkennungsrate von 100% und keine fälschlicherweise Erkennung von nicht vorhandenem Gleit- oder Schleuderschlupf. Durch das sichere Erkennen von Gleit- und Schleuderschlupf können die Konfidenzintervalle rechtzeitig verkleinert werden.
- Das erste Teilverfahren (die vorausgestellte Kalibriermethode) zur Bestimmung der Statistik der Sensoren (Einzelgenauigkeiten der Sensoren) kann einmalig für den Sensortyp fabrikseitig durchgeführt werden oder öfter im laufenden Betrieb und ist im Wesentlichen konstant für den jeweiligen Sensortyp.

## Patentansprüche

1. Verfahren zum Erkennen von systematischen Abweichungen (sA) beim Bestimmen einer Bewegungsgröße (v) eines bodengebundenen, insbesondere schienengebundenen, Fahrzeugs (F),
- bei dem anhand eines einem Zeitpunkt (t) zugeordneten Messwertes (n_{S1}.t) zumindest eines Sensors (S1) ein dem Zeitpunkt (t) zugeordneter Wert (v_{S1}.t) der Bewegungsgröße (v) bestimmt wird,
**dadurch gekennzeichnet, dass**
- in Abhängigkeit des dem Zeitpunkt (t) zugeordneten Wertes (v_{S1}.t) der Bewegungsgröße (v) und eines für diesen Wert (v_{S1}.t) bestimmten statistischen Sensorgenauigkeitswertes (σs_v_{S1}.t) des zumindest einen Sensors (S1) ein dem Zeitpunkt (t) zugeordneter Testgrößenwert (TG_{S1}.t) gebildet und im Zuge eines Vergleiches mit einer vorgegebene Testschranke (TS) verglichen wird, um in Abhängigkeit eines bei dem Vergleich gewonnenen Vergleichsergebnisses eine Annahme (A1, A2, A3) hinsichtlich eines Vorliegens einer systematischen Abweichung (sA) zu treffen,
- wobei der Testgrößenwert (TG_{S1}.t) zusätzlich in Abhängigkeit eines voraussichtlichen Wertes (v*.t) der Bewegungsgröße (v) für den Zeitpunkt (t) gebildet wird,
- wobei anhand eines auf einen vorhergehenden Systemzustand (SZ.tp) des Fahrzeugs (F) angewandten Bewegungsmodells (BM) ein voraussichtlicher Systemzustand (SZ*.t) des Fahrzeugs (F) für den Zeitpunkt (t) ermittelt wird und
- anhand eines auf den voraussichtlichen Systemzustand (SZ*.t) angewandten Transfermodells (TM) der voraussichtliche Wert (v*.t) der Bewegungsgröße (v) für den Zeitpunkt (t) ermittelt wird.

2. Verfahren nach Anspruch 1,
**dadurch gekennzeichnet, dass**
der Betriebszustand (Z.t) eines Timers (T), welcher im Falle einer zuvor getroffenen Annahme (A1), dass eine systematische Abweichung (sA) vorliegt, gestartet wurde, zu dem Zeitpunkt (t) ausgelesen wird.

3. Verfahren nach einem der Ansprüche 1 oder 2,
**dadurch gekennzeichnet, dass**
ein zusätzlicher Testgrößenwert (TG'_{S1}.t) gebildet und im Zuge eines zusätzlichen Vergleiches mit einer vorgegebenen zusätzlichen Testschranke (TS') verglichen wird, um die Annahme hinsichtlich des Vorliegens einer systematischen Abweichung (sA) auch in Abhängigkeit eines bei dem zusätzlichen Vergleich gewonnenen zusätzlichen Vergleichsergebnisses zu treffen.

4. Verfahren nach einem der Ansprüche 1 oder 2,
**dadurch gekennzeichnet, dass**
im Falle dessen, dass zumindest ein weiterer Sensor (S2) einen dem Zeitpunkt (t) zugeordneten weiteren Messwert (n_{S2}.t) bereitstellt,
- anhand dieses weiteren Messwertes (n_{S2}.t) ein dem Zeitpunkt (t) zugeordneter weiterer Wert (v_{S2}.t) der Bewegungsgröße (v) bestimmt wird und
- in Abhängigkeit des dem Zeitpunkt (t) zugeordneten weiteren Wertes (v_{S2}.t) der Bewegungsgröße (v) und eines für diesen weiteren Wert (v_{S2}.t) bestimmten statistischen Sensorgenauigkeitswertes (σs_v_{S2}.t) des weiteren Sensors (S2) ein dem Zeitpunkt (t) zugeordneter weiterer Testgrößenwert (TG_{S2}.t) gebildet und im Zuge eines weiteren Vergleiches mit der vorgegebene Testschranke (TS) verglichen wird, um die Annahme (A1, A2, A3) hinsichtlich des Vorliegens einer systematischen Abweichung (sA) auch in Abhängigkeit eines bei dem weiteren Vergleich gewonnenen weiteren Vergleichsergebnisses zu treffen.

5. Verfahren nach Anspruche 4,
**dadurch gekennzeichnet, dass**
ein zusätzlicher weiterer Testgrößenwert (TG'_{S2}.t) gebildet und im Zuge eines zusätzlichen weiteren Vergleiches mit der vorgegebenen zusätzlichen Testschranke (TS') verglichen wird, um die Annahme hinsichtlich des Vorliegens einer systematischen Abweichung (sA) auch in Abhängigkeit eines bei dem zusätzlichen weiteren Vergleich gewonnenen zusätzlichen weiteren Vergleichsergebnisses zu treffen.

6. Verfahren nach Anspruch 2,
**dadurch gekennzeichnet, dass**
die Annahme hinsichtlich des Vorliegens einer systematischen Abweichung (sA) wie folgt getroffen wird:
- wenn der dem Zeitpunkt (t) zugeordnete Testgrößenwert (TG_{S1}.t) größer als die vorgegebene Testschranke (TS) ist, dann wird das Vorliegen einer systematischen Abweichung (sA) zu dem Zeitpunkt (t) angenommen,
- wenn der Testgrößenwert (TG_{S1}.t) kleiner als die vorgegebene Testschranke (TS) ist und außerdem der Timer (T) läuft, dann wird das Vorliegen einer systematischen Abweichung (sA) zu dem Zeitpunkt (t) nicht ausgeschlossen,
- wenn der Testgrößenwert (TG_{S1}.t) kleiner als die vorgegebene Testschranke (TS) ist und außerdem der Timer (T) nicht läuft, dann wird das Vorliegen einer systematischen Abweichung (sA) zu dem Zeitpunkt (t) ausgeschlossen.

7. Verfahren nach Anspruch 3,
**dadurch gekennzeichnet, dass**
die Annahme hinsichtlich des Vorliegens einer systematischen Abweichung (sA) wie folgt getroffen wird:
- wenn der dem Zeitpunkt (t) zugeordnete Testgrößenwert (TG_{S1}.t) größer als die vorgegebene Testschranke (TS) ist und/oder wenn der zusätzliche Testgrößenwert (TG'_{S1}.t) größer als die vorgegebene zusätzliche Testschranke (TS') ist, dann wird das Vorliegen einer systematischen Abweichung (sA) zu dem Zeitpunkt (t) angenommen,
- wenn einerseits der Testgrößenwert (TG_{S1}.t) kleiner als die vorgegebene Testschranke (TS) sowie andererseits der zusätzliche Testgrößenwert (TG'_{S1}.t) kleiner als die vorgegebene zusätzliche Testschranke (TS') ist und außerdem der Timer (T) läuft, dann wird das Vorliegen einer systematischen Abweichung (sA) zu dem Zeitpunkt (t) nicht ausgeschlossen,
- wenn einerseits der Testgrößenwert (TG_{S1}.t) kleiner als die vorgegebene Testschranke (TS) sowie andererseits der zusätzliche Testgrößenwert (TG'_{S1}.t) kleiner als die vorgegebene zusätzliche Testschranke (TS') ist und außerdem der Timer (T) nicht läuft, dann wird das Vorliegen einer systematischen Abweichung (sA) zu dem Zeitpunkt (t) ausgeschlossen.

8. Verfahren nach Anspruch 4,
**dadurch gekennzeichnet, dass**
die Annahme hinsichtlich des Vorliegens einer systematischen Abweichung (sA) wie folgt getroffen wird:
- wenn der dem Zeitpunkt (t) zugeordnete Testgrößenwert (TG_{S1}.t) größer als die vorgegebene Testschranke (TS) ist und/oder wenn der dem Zeitpunkt (t) zugeordnete weitere Testgrößenwert (TG_{S2}.t) größer als die vorgegebene Testschranke (TS) ist, dann wird das Vorliegen einer systematischen Abweichung (sA) zu dem Zeitpunkt (t) angenommen,
- wenn der dem Zeitpunkt (t) zugeordnete Testgrößenwert (TG_{S1}.t) und der dem Zeitpunkt (t) zugeordnete weitere Testgrößenwert (TG_{S2}.t) kleiner als die vorgegebene Testschranke (TS) sind und außerdem der Timer (T) läuft, dann wird das Vorliegen einer systematischen Abweichung (sA) zu dem Zeitpunkt (t) nicht ausgeschlossen,
- wenn der dem Zeitpunkt (t) zugeordnete Testgrößenwert (TG_{S1}.t) und der dem Zeitpunkt (t) zugeordnete weitere Testgrößenwert (TG_{S2}.t) kleiner als die vorgegebene Testschranke (TS) sind und außerdem der Timer (T) nicht läuft, dann wird das Vorliegen einer systematischen Abweichung (sA) zu dem Zeitpunkt (t) ausgeschlossen.

9. Verfahren nach Anspruch 5,
**dadurch gekennzeichnet, dass**
die Annahme hinsichtlich des Vorliegens einer systematischen Abweichung (sA) wie folgt getroffen wird:
- wenn zumindest eine der folgenden Bedingungen zutrifft:
• der dem Zeitpunkt (t) zugeordnete Testgrößenwert (TG_{S1}.t) ist größer als die vorgegebene Testschranke (TS),
• der dem Zeitpunkt (t) zugeordnete weitere Testgrößenwert (TG_{S2}.t) ist größer als die vorgegebene Testschranke (TS),
• der dem Zeitpunkt (t) zugeordnete zusätzliche Testgrößenwert (TG'_{S1}.t) ist größer als die vorgegebene zusätzliche Testschranke (TS'),
• der dem Zeitpunkt (t) zugeordnete zusätzliche weitere Testgrößenwert (TG'_{S2}.t) ist größer als die vorgegebene zusätzliche Testschranke (TS'),
dann wird das Vorliegen einer systematischen Abweichung (sA) zu dem Zeitpunkt (t) angenommen,
- wenn einerseits der Testgrößenwert (TG_{S1}.t) und der weitere Testgrößenwert (TG_{S2}.t) kleiner als die vorgegebene Testschranke (TS) sind sowie andererseits der zusätzliche Testgrößenwert (TG'_{S1}.t) und der zusätzliche weitere Testgrößenwert (TG'_{S2}.t) kleiner als die vorgegebene zusätzliche Testschranke (TS') sind und außerdem der Timer (T) läuft, dann wird das Vorliegen einer systematischen Abweichung (sA) zu dem Zeitpunkt (t) nicht ausgeschlossen,
- wenn einerseits der Testgrößenwert (TG_{S1}.t) und der weitere Testgrößenwert (TG_{S2}.t) kleiner als die vorgegebene Testschranke (TS) sind sowie andererseits der zusätzliche Testgrößenwert (TG'_{S1}.t) und der zusätzliche weitere Testgrößenwert (TG'_{S2}.t) kleiner als die vorgegebene zusätzliche Testschranke (TS') sind und außerdem der Timer (T) nicht läuft, dann wird das Vorliegen einer systematischen Abweichung (sA) zu dem Zeitpunkt (t) ausgeschlossen.

10. Verfahren nach der Ansprüche 1 bis 9,
**dadurch gekennzeichnet, dass**
der statistische Sensorgenauigkeitswert (σs_v_{S1}.t) anhand einer zuvor für den zumindest einen Sensor (S1) ermittelten Sensorkennlinie (K_{S1}) oder Sensorfunktion bestimmt wird.

11. Verfahren nach Anspruch 10,
**dadurch gekennzeichnet, dass**
dass bei einer realen oder simulierten Testfahrt des Fahrzeugs (F) oder eines an seiner statt verwendeten Testfahrzeugs mittels des zumindest einen Sensors (S1) oder mittels eines an seiner statt verwendeten Testsensors des gleichen Sensortyps jeweils Testmesswerte (n_{S1}.1, n_{S1}.2, n_{S1}.3, ...) erfasst und anhand dieser Testmesswerte (n_{S1}.1, n_{S1}.2, n_{S1}.3, ...) Testwerte (v_{S1}.1, v_{S1}.2, v_{S1}.3, ...) der Bewegungsgröße (v) bestimmt werden und
dass anhand der Testwerte (v_{S1}.1, v_{S1}.2, v_{S1}.3, ...) der Bewegungsgröße (v) für den zumindest einen Sensor (S1) ein Verlauf seiner statistischen Sensorgenauigkeit (σs_v_{S1}) in Abhängigkeit der Bewegungsgröße (v) in Form der jeweiligen Sensorkennlinie (K_{S1}) bzw. Sensorfunktion bestimmt wird.

12. Verfahren nach Anspruch 11,
**dadurch gekennzeichnet, dass**
die Bewegungsgröße (v) des Fahrzeugs (F) bzw. des an seiner statt verwendeten Testfahrzeugs bei der Testfahrt, insbesondere durch vorsichtiges Beschleunigen und vorsichtiges Abbremsen, derart geändert wird, dass ein Rutschen der Räder des Fahrzeugs (F) auf dem Boden bzw. den Schienen (S) im Wesentlichen vermieden ist.

13. Verfahren nach einem der Ansprüche 11 oder 12,
**dadurch gekennzeichnet, dass**
- mittels einer Tiefpassfilterung aus den Testwerten (v_{S1}.1, v_{S1}.2, v_{S1}.3, ...) Tiefpassfilterwerte gebildet werden,
- zu jedem der Testwerte auf der Basis der Tiefpassfilterwerte eine gleitende Standardabweichung (σs_v_{S1}.1, σs_v_{S1}.2, σs_v_{S1}.3, ... ) bestimmt wird und
- in eine daraufhin gebildete Darstellung (D) der gleitenden Standardabweichungen über den Beträgen (|v_{S1}.1|, |v_{S1}.2|, |v_{S1}.3|, ...; ) der Testwerte (v_{S1}.1, v_{S1}.2, v_{S1}.3, ...) eine Ausgleichsgerade, insbesondere mit Hilfe der Methode der kleinsten Quadrate, eingepasst wird, wobei die Ausgleichsgerade den Verlauf der statistischen Sensorgenauigkeit (σs_v_{S1}) des zumindest einen Sensors (S1) in Abhängigkeit der Bewegungsgröße (v) angibt.

14. Verfahren nach Anspruch 1,
**dadurch gekennzeichnet, dass**
die Differenz aus dem Wert (v_{S1}.t) der Bewegungsgröße (v) und dem voraussichtlichen Wert (v*.t) der Bewegungsgröße (v) als Innovationswert (d_{S1}.t) bestimmt wird.

15. Verfahren nach Anspruch 14,
**dadurch gekennzeichnet, dass**
- anhand des auf einen vorhergehenden Systemzustandsgenauigkeitswert (σ_SZ.tp) angewandten Bewegungsmodells (BM) sowie eines auf ein vorgegebenes Systemrauschen (SR) angewandtes Übertragungsmodells (UM) ein Systemzustandsgenauigkeitswert (σ_SZ*.t) des voraussichtlichen Systemzustands (SZ*.t) ermittelt wird,
- anhand des Systemzustandsgenauigkeitswertes (σ_SZ*.t) des voraussichtlichen Systemzustands (SZ*.t) und des Transfermodells (TM) ein Genauigkeitswert (σ_ v*.t) des voraussichtlichen Wertes (v*.t) der Bewegungsgröße (v) ermittelt wird,
- die Summe aus dem Genauigkeitswert (σ_ v*.t) des voraussichtlichen Wertes (v*.t) der Bewegungsgröße (v) und dem Sensorgenauigkeitswert (σs_v_{S1}.t) als Innovationsgenauigkeitswert (σ_d_{S1}.t) bestimmt wird und
- der Quotient aus dem Betrag (|d_{S1}.t|) des Innovationswertes (d_{S1}.t) und dem Innovationsgenauigkeitswert (σ_d_{S1}.t) als der Testgrößenwert (TG_{S1}.t) bestimmt wird.

16. Verfahren nach Anspruch 14,
**dadurch gekennzeichnet, dass**
- als Produkt aus dem Innovationswert (d_{S1}.t) und einem vorgegebenen Gewichtungsfaktor (GF) ein Residualwert (d'_{S1}.t) ermittelt wird,
- als Produkt aus dem mit minus eins multiplizierten Gewichtungsfaktor (GF) und dem Sensorgenauigkeitswert (σs_v_{S1}.t) ein Residualgenauigkeitswert (σ_d'_{S1}.t) bestimmt wird, und
- der Quotient aus dem Betrag (|d'_{S1}.t|) des Residualwertes (d'_{S1}.t) und dem Residualgenauigkeitswert (σ_d'_{S1}.t) als der zusätzliche Testgrößenwert (TG'_{S1}.t) bestimmt wird.

17. Verfahren nach einem der Ansprüche 1 bis 16,
**dadurch gekennzeichnet, dass**
die eine Testschranke (TS) als Quantil der Standardnormalverteilung der Ordnung 1-α/2 bestimmt wird, wobei für α als Irrtumswahrscheinlichkeit ein Wert (Wα) vorgegeben wird.

18. Verfahren nach einem der Ansprüche 3 bis 16,
**dadurch gekennzeichnet, dass**
die zusätzliche Testschranke (TS') als Quantil der Standardnormalverteilung der Ordnung 1-α/2 bestimmt wird, wobei für α als Irrtumswahrscheinlichkeit ein zusätzlicher Wert (W'α) vorgegeben wird.

19. Anordnung (A) zum Erkennen von systematischen Abweichungen (sA) beim Bestimmen einer Bewegungsgröße (v) eines bodengebundenen, insbesondere schienengebundenen, Fahrzeugs (F), welches zumindest einen Sensor (S1) umfasst, mit einer Recheneinheit (RE), auf der eine Software ausführbar ist, welche die Anordnung (A) dazu veranlasst, ein Verfahren nach einem der Ansprüche 1 bis 18 auszuführen.

20. Bodengebundenes, insbesondere schienengebundenes, Fahrzeugs (F) mit einer Anordnung (A) nach Anspruch 19.

## Claims

1. Method for detecting systematic deviations (sA) during determination of a movement variable (v) of a ground-based, in particular rail-based, vehicle (F),
- wherein, on the basis of a measurement value (n_{S1}.t), associated with a time point (t), of at least one sensor (S1), a value (v_{S1}.t) of the movement variable (v) associated with the time point (t) is determined,
**characterised in that**
- dependent upon the value (v_{S1}.t), associated with the time point (t), of the movement variable (v) and upon a statistical sensor accuracy value (σs_v_{S1}.t) of the at least one sensor (S1) determined for this value (v_{S1}.t), a test variable value (TG_{S1}.t) associated with the time point (t) is formed and, in the course of a comparison, is compared with a specified test bound (TS), in order to make an assumption (A1, A2, A3), dependent upon a comparison result obtained from the comparison, with regard to an existence of a systematic deviation (sA),
- wherein the test variable value (TG_{S1}.t) is formed for the time point (t) additionally as a function of an expected value (v*.t) of the movement variable (v),
- wherein on the basis of a movement model (BM) applied to a previous system state (SZ.tp) of the vehicle (F), an expected system state (SZ*.t) of the vehicle (F) is determined for the time point (t) and
- on the basis of a transfer model (TM) applied to the expected system state (SZ*.t), the expected value (v*.t) of the movement variable (v) for the time point (t) is determined.

2. Method according to claim 1,
**characterised in that**
the operational state (Z.t) of a timer (T) that has been started in the event of a previously made assumption (A1) that a systematic deviation (sA) exists is read out at the time point (t).

3. Method according to one of claims 1 or 2,
**characterised in that**
an additional test variable value (TG'_{S1}.t) is formed and, in the course of an additional comparison, is compared with a specified additional test bound (TS') in order to make the assumption regarding the existence of a systematic deviation (sA) dependent also upon an additional comparison result obtained during the additional comparison.

4. Method according to one of claims 1 or 2,
**characterised in that**
in the event that at least one further sensor (S2) provides a further measurement value (n_{S2}.t) associated with the time point (t),
- on the basis of this further measurement value (n_{S2}.t), a further value (v_{S2}.t) of the movement variable (v) associated with the time point (t) is determined, and
- dependent upon the further value (v_{S2}.t), associated with the time point (t), of the movement variable (v) and upon a statistical sensor accuracy value (σs_v_{S2}.t) of the further sensor (S2) determined for this further value (v_{S2}.t), a further test variable value (TG_{S2}.t) associated with the time point (t) is formed and, in the course of a further comparison, is compared with the specified test bound (TS), in order to make the assumption (A1, A2, A3), dependent also upon a further comparison result obtained from the further comparison, with regard to an existence of a systematic deviation (sA).

5. Method according to claim 4,
**characterised in that**
an additional further test variable value (TG'_{S2}.t) is formed and, in the course of an additional further comparison, is compared with the specified additional test bound (TS') in order to make the assumption regarding the existence of a systematic deviation (sA), dependent also upon an additional further comparison result obtained during the additional further comparison.

6. Method according to claim 2,
**characterised in that**
the assumption regarding the existence of a systematic deviation (sA) is made as follows:
- if the test variable value (TG_{S1}.t) associated with the time point (t) is larger than the specified test bound (TS), then the existence of a systematic deviation (sA) at the time point (t) is assumed,
- if the test variable value (TG_{S1}.t) is smaller than the specified test bound (TS) and the timer (T) is also running, then the existence of a systematic deviation (sA) at the time point (t) is not precluded,
- if the test variable value (TG_{S1}.t) is smaller than the specified test bound (TS) and the timer (T) is also not running, then the existence of a systematic deviation (sA) at the time point (t) is precluded.

7. Method according to claim 3,
**characterised in that**
the assumption regarding the existence of a systematic deviation (sA) is made as follows:
- if the test variable value (TG_{S1}.t) associated with the time point (t) is larger than the specified test bound (TS) and/or if the additional test variable value (TG'_{S1}.t) is larger than the specified additional test bound (TS'), then the existence of a systematic deviation (sA) at the time point (t) is assumed,
- if, firstly, the test variable value (TG_{S1}.t) is smaller than the specified test bound (TS) and, secondly, the additional test variable value (TG'_{S1}.t) is smaller than the specified additional test bound (TS') and the timer (T) is also running, then the existence of a systematic deviation (sA) at the time point (t) is not precluded,
- if, firstly, the test variable value (TG_{S1}.t) is smaller than the specified test bound (TS) and, secondly, the additional test variable value (TG'_{S1}.t) is smaller than the specified additional test bound (TS') and the timer (T) is also not running, then the existence of a systematic deviation (sA) at the time point (t) is precluded,

8. Method according to claim 4,
**characterised in that**
the assumption regarding the existence of a systematic deviation (sA) is made as follows:
- if the test variable value (TG_{S1}.t) associated with the time point (t) is larger than the specified test bound (TS) and/or if the additional test variable value (TG_{S2}.t) associated with the time point (t) is larger than the specified test bound (TS), then the existence of a systematic deviation (sA) at the time point (t) is assumed,
- if the test variable value (TG_{S1}.t) associated with the time point (t) and the further test variable value (TG_{S2}.t) associated with the time point (t) are smaller than the specified test bound (TS) and the timer (T) is also running, then the existence of a systematic deviation (sA) at the time point (t) is not precluded,
- if the test variable value (TG_{S1}.t) associated with the time point (t) and the further test variable value (TG_{S2}.t) associated with the time point (t) are smaller than the specified test bound (TS) and the timer (T) is also not running, then the existence of a systematic deviation (sA) at the time point (t) is precluded.

9. Method according to claim 5,
**characterised in that**
the assumption regarding the existence of a systematic deviation (sA) is made as follows:
- if at least one of the following conditions applies:
• the test variable value (TG_{S1}.t) associated with the time point (t) is larger than the specified test bound (TS),
• the further test variable value (TG_{S2}.t) associated with the time point (t) is larger than the specified test bound (TS),
• the additional test variable value (TG'_{S1}.t) associated with the time point (t) is larger than the specified additional test bound (TS'),
• the additional further test variable value (TG'_{S2}.t) associated with the time point (t) is larger than the specified additional test bound (TS'),
then the existence of a systematic deviation (sA) at the time point (t) is assumed,
- if, firstly, the test variable value (TG_{S1}.t) and the further test variable value (TG_{S2}.t) are smaller than the specified test bound (TS) and, secondly, the additional test variable value (TG'_{S1}.t) and the additional further test variable value (TG'_{S2}.t) are smaller than the specified additional test bound (TS') and the timer (T) is also running, then the existence of a systematic deviation (sA) at the time point (t) is not precluded,
- if, firstly, the test variable value (TG_{S1}.t) and the further test variable value (TG_{S2}.t) are smaller than the specified test bound (TS) and, secondly, the additional test variable value (TG'_{S1}.t) and the additional further test variable value (TG'_{S2}.t) are smaller than the specified additional test bound (TS') and the timer (T) is also not running, then the existence of a systematic deviation (sA) at the time point (t) is precluded.

10. Method according to one of claims 1 to 9,
**characterised in that**
the statistical sensor accuracy value (σs_v_{S1}.t) is determined on the basis of a sensor characteristic curve (K_{S1}) or sensor function previously determined for the at least one sensor (S1).

11. Method according to claim 10,
**characterised in that**
during a real or simulated test journey of the vehicle (F) or of a test vehicle used in its place, by means of the at least one sensor (S1) or a test sensor of the same sensor type used in its place, test measurement values (n_{S1}.1, n_{S1}.2, n_{S1}.3, ...) are captured and, on the basis of these test measurement values (n_{S1}.1, n_{S1}.2, n_{S1}.3, ...), test values (v_{S1}.1, v_{S1}.2, v_{S1}.3, ...) of the movement variable (v) are determined and
**in that** on the basis of the test values (v_{S1}.1, v_{S1}.2, v_{S1}.3, ...) of the movement variable (v) for the at least one sensor (S1), a variation of its statistical sensor accuracy (σs_v_{S1}) dependent upon the movement variable (v) in the form of the respective sensor characteristic curve (K_{S1}) and/or the sensor function is determined.

12. Method according to claim 11,
**characterised in that**
the movement variable (v) of the vehicle (F) and/or of the test vehicle used in its place during the test journey, in particular, by means of careful acceleration and careful braking, is changed such that a slippage of the wheels of the vehicle (F) on the ground or the rails (S) is substantially prevented.

13. Method according to one of claims 11 or 12,
**characterised in that**
- by means of a low pass filtration, low pass filter values are formed from the test values (v_{S1}.1, v_{S1}.2, v_{S1}.3, ...),
- for each of the test values on the basis of the low pass filter values, a sliding standard deviation (σs_v_{S1}.1, σs_v_{S1}.2, σs_v_{S1}.3, ...) is determined, and
- a regression line is fitted into a representation (D) formed thereafter of the sliding standard deviations over the moduli (lv_{S1}.1|, |v_{S1}.2|, |v_{S1.}3|, ...;) of the test values (v_{S1}.1, v_{S1}.2, v_{S1}.3, ...), in particular with the aid of the least squares method, wherein the regression line shows the variation of the statistical sensor accuracy (σs_v_{S1}) of the at least one sensor (S1) dependent upon the movement variable (v).

14. Method according to claim 1,
**characterised in that**
the difference between the value (v_{S1}.t) of the movement variable (v) and the expected value (v*.t) of the movement variable (v) is determined as an innovation value (d_{S1}.t).

15. Method according to claim 14,
**characterised in that**
- on the basis of the movement model (BM) applied to a previous system state accuracy value (σ_SZ.tp) and of a transmission model (UM) applied to a specified system noise (SR), a system state accuracy value (σ_SZ*.t) of the expected system state (SZ*.t) is determined,
- on the basis of a system state accuracy value (σ_SZ*.t) of the expected system state (SZ*.t) and of the transfer model (TM), an accuracy value (σ_v*.t) of the expected value (v*.t) of the movement variable (v) is determined,
- the sum of the accuracy value (σ_v*.t) of the expected value (v*.t) of the movement variable (v) and the sensor accuracy value (σs _v_{S1}.t) is determined as an innovation accuracy value (σ_d_{S1}.t), and
- the quotient is determined from the modulus (|d_{S1}.t|) of the innovation value (d_{S1}.t) and the innovation accuracy value (σ_d_{S1}.t) as the test variable value (TG_{S1}.t).

16. Method according to claim 14,
**characterised in that**
- a residual value (d'_{S1}.t) is determined as the product of the innovation value (d_{S1}.t) and a specified weighting factor (GF),
- a residual accuracy value (s_d'_{S1}.t) is determined as the product of the weighting factor (GF) multiplied by minus one and the sensor accuracy value (σs_v_{S1}.t), and
- the quotient is determined from the modulus (|d'_{S1}.t|) of the residual value (d'_{S1}.t) and the residual accuracy value (σ_d'_{S1}.t) as the additional test variable value (TG'_{S1}.t).

17. Method according to one of claims 1 to 16,
**characterised in that**
one test bound (TS) is determined as a quantile of the standard normal distribution of the order 1-α/2, wherein a value (Wα) is specified for α as the probability of error.

18. Method according to one of claims 3 to 16,
**characterised in that**
the additional test bound (TS') is preferably determined as a quantile of the standard normal distribution of the order 1-α/2, wherein an additional value (W'α) is specified for α as the probability of error.

19. Arrangement (A) for detecting systematic deviations (sA) during determination of a movement variable (v) of a ground-based, in particular rail-based, vehicle (F), which comprises at least one sensor (S1), having a computer unit (RE) upon which software can be executed, which causes the arrangement (A) to carry out a method according to one of claims 1 to 18.

20. Ground-based, in particular rail-based, vehicle (F) with an arrangement (A) according to claim 19.

## Revendications

1. Procédé d'identification d'écarts (sA) systématiques lors de la détermination d'une grandeur (v) de déplacement d'un véhicule (F) terrestre, en particulier guidé sur rail,
- dans lequel, à l'aide d'une valeur (n_{S1}.t) de mesure, associée à un instant (t), d'au moins un capteur (S1), on détermine une valeur (v_{S1}.t), associée à l'instant (t), de la grandeur (v) de déplacement,
**caractérisé en ce que**
- en fonction de la valeur (v_{S1}.t), associée à l'instant (t), de la grandeur (v) de déplacement et d'une valeur (σs_v_{S1}.t) statistique de précision du capteur, déterminée pour cette valeur (v_{S1}.t), du au moins un capteur (S1), on forme une valeur (TG_{S1}.t) de grandeur de test, associée à l'instant (t), et, dans une comparaison, on la compare à une limite (TS) de test donnée à l'avance, afin de faire, en fonction d'un résultat de comparaison obtenu lors de la comparaison, une hypothèse (A1, A2, A3) concernant la présence d'un écart (sA) systématique,
- dans lequel on forme la valeur (TG_{S1}.t) de grandeur de test en outre en fonction d'une valeur (v*.t) prévisible de la grandeur (v) de déplacement pour l'instant (t),
- dans lequel, à l'aide d'un modèle (BM) de déplacement appliqué à un état (SZ.tp) de système précédent du véhicule (F), on détermine un état (SZ*.t) de système prévisible du véhicule (F) pour l'instant (t), et
- à l'aide d'un modèle (TM) de transfert, appliqué à l'état (SZ*.t) de système prévisible, on détermine la valeur (v*.t) prévisible de la grandeur (v) de déplacement pour l'instant (t).

2. Procédé suivant la revendication 1,
**caractérisé en ce que**
l'on lit, à l'instant (t) l'état (Z.t) de fonctionnement d'une minuterie (T), qui a été démarrée dans le cas d'une hypothèse (A1) faite auparavant, qu'il y a un écart (sA) systématique.

3. Procédé suivant l'une des revendications 1 ou 2,
**caractérisé en ce que**
l'on forme une valeur (TG'_{S1}.t) de grandeur de test supplémentaire et, dans une comparaison supplémentaire, on la compare à une limite (TS') de test supplémentaire donnée à l'avance, afin de faire l'hypothèse concernant la présence d'un écart (sA) systématique également en fonction d'un résultat de comparaison supplémentaire obtenu lors de la comparaison supplémentaire.

4. Procédé suivant l'une des revendications 1 ou 2,
**caractérisé en ce que**,
dans le cas où au moins un autre capteur (S2) donne une autre valeur (n_{S2}.t) de mesure, associée à l'instant (t),
- à l'aide de cette autre valeur (n_{S2}.t) de mesure, on détermine une autre valeur (v_{S2}.t), associée à l'instant (t), de la grandeur (v) de déplacement, et
- en fonction de l'autre valeur (v_{S2}.t), associée à l'instant (t), de la grandeur (v) de déplacement et d'une valeur (σs_v_{S2}.t) statistique de précision du capteur, déterminée pour cette autre valeur (v_{S2}.t), de l'autre capteur (S2), on forme une autre valeur (TG_{S2}.t) de grandeur de test, associée à l'instant (t), et, dans une autre comparaison, on la compare à la limite (TS) de test donnée à l'avance, afin de faire l'hypothèse (A1, A2, A3) concernant un écart (sA) systématique également en fonction d'un résultat d'une autre comparaison obtenue dans l'autre comparaison.

5. Procédé suivant la revendication 4,
**caractérisé en ce que**
l'on forme une autre valeur (TG'_{S2}.t) de grandeur de test supplémentaire et, dans une autre comparaison supplémentaire, on la compare à la limite (TS') de test supplémentaire donnée à l'avance, afin de faire l'hypothèse concernant la présence d'un écart (sA) systématique également en fonction d'un autre résultat de comparaison supplémentaire obtenu dans l'autre comparaison supplémentaire.

6. Procédé suivant la revendication 2,
**caractérisé en ce que**
l'on fait l'hypothèse concernant la présence d'un écart (sA) systématique de la manière suivante :
- si la valeur (TG_{S1}.t) de grandeur de test, associée à l'instant (t), est plus grande que la limite (TS) de test donnée à l'avance, on fait l'hypothèse de la présence d'un écart (sA) systématique à l'instant (t),
- si la valeur (TG_{S1}.t) de grandeur de test est plus petite que la limite (TS) de test donnée à l'avance et si en outre la minuterie (T) est en cours, on n'exclut pas la présence d'un écart (sA) systématique à l'instant (t),
- si la valeur (TG_{S1}.t) est plus petite que la limite (TS) de test donnée à l'avance et si en outre la minuterie (T) n'est pas en cours, on exclut la présence d'un écart (sA) systématique à l'instant (t).

7. Procédé suivant la revendication 3,
**caractérisé en ce que**
l'on fait l'hypothèse concernant la présence d'un écart (sA) systématique de la manière suivante :
- si la valeur (TG_{S1}.t) de test, associée à l'instant (t), est plus grande que la limite (TS) de test donnée à l'avance et/ou si la valeur (TG'_{S1}.t) de grandeur de test est plus grande que la limite (TS') de test supplémentaire donnée à l'avance, on fait l'hypothèse de la présence d'un écart (sA) systématique à l'instant (t),
- si d'une part la valeur (TGₛ₁.t) de grandeur de test est plus petite que la limite (TS) de test donnée à l'avance, ainsi que d'autre part la valeur (TG'ₛ₁.t) de grandeur de test supplémentaire est plus petite que la limite (TS') de test supplémentaire donnée à l'avance et si en outre la minuterie (T) est en cours, on n'exclut pas la présence d'un écart (sA) systématique à l'instant (t),
- si d'une part la valeur (TGₛ₁.t) de grandeur de test est plus petite que la limite (TS) de test donnée à l'avance, ainsi que d'autre part la valeur (TG'ₛ₁.t) de grandeur de test supplémentaire est plus petite que la limite (TS') de test supplémentaire donnée à l'avance, et si en outre la minuterie (T) n'est pas en cours, on exclut la présence d'un écart (sA) systématique à l'instant (t).

8. Procédé suivant la revendication 4,
**caractérisé en ce que**
l'on fait l'hypothèse concernant la présence d'un écart (sA) systématique de la manière suivante :
- si la valeur (TGₛ₁.t) de grandeur de test, associée à l'instant (t), est plus grande que la limite (TS) de test donnée à l'avance et/ou si l'autre valeur (TGₛ₂.t) de grandeur de test, associée à l'instant (t), est plus grande que la limite (TS) de test donnée à l'avance, on fait l'hypothèse de la présence d'un écart (sA) systématique à l'instant (t),
- si la valeur (TGₛ₁.t) de grandeur de test, associée à l'instant (t), et l'autre valeur (TGₛ₂.t) de grandeur de test, associée à l'instant (t), sont plus petites que la limite (TS) de test donnée à l'avance et si en outre la minuterie (T) est en cours, on n'exclut pas la présence d'un écart (sA) systématique à l'instant (t),
- si la valeur (TGₛ₁.t) de grandeur de test, associée à **l'instant** (t), et **l'autre** valeur (TGₛ₂.t) de grandeur de test, associée à l'instant (t), sont plus petites que la limite (TS) de test donnée à l'avance et si en outre la minuterie (T) n'est pas en cours, on exclut la présence **d'un** écart (sA) systématique à l'instant (t).

9. Procédé suivant la revendication **5,**
**caractérisé en ce que**
l'on fait l'hypothèse concernant la présence **d'un** écart (sA) systématique de la manière suivante :
- si au moins l'une des conditions suivantes est satisfaite :
• la valeur (TGₛ₁.t) de grandeur de test, associée à l'instant (t), est plus grande que la limite (TS) de test donnée à l'avance,
• l'autre valeur (TGₛ₂.t) de grandeur de test, associée à l'instant (t), est plus grande que la limite (TS) de test donnée à l'avance,
• la valeur (TG'ₛ₁.t) de grandeur de test supplémentaire, associée à l'instant (t), est plus grande que la limite (TS') de test supplémentaire donnée à l'avance,
• l'autre valeur (TG'ₛ₂.t) de grandeur de test supplémentaire, associée à l'instant (t), est plus grande que la limite (TS') de test supplémentaire donnée à l'avance,
on fait l'hypothèse de la présence d'un écart (sA) systématique à l'instant (t),
- si d'une part la valeur (TGₛ₁.t) de grandeur de test et l'autre valeur (TGₛ₂.t) de grandeur de test sont plus petites que la limite (TS) de test donnée à l'avance, ainsi que d'autre part la valeur (TG'ₛ₁.t) de grandeur de test et l'autre valeur (TG'ₛ₂.t) de test supplémentaire sont plus petites que la limite (TS') de test supplémentaire donnée à l'avance et si en outre la minuterie (T) est en cours, on n'exclut pas la présence d'un écart (sA) systématique à l'instant (t),
- si d'une part la valeur (TGₛ₁.T) de grandeur de test et l'autre valeur (TGₛ₂.t) de grandeur de test sont plus petites que la limite (TS) de test donnée à l'avance, ainsi que d'autre part la valeur (TG'ₛ₁.t) de grandeur de test supplémentaire et l'autre valeur (TG'ₛ₂.t) de test supplémentaire sont plus petites que la limite (TS') de test supplémentaire donnée à l'avance et si en outre la minuterie (T) n'est pas en cours, on exclut la présence d'un écart (sA) systématique à l'instant (t).

10. Procédé suivant l'une des revendications 1 à 9,
**caractérisé en ce que**
l'on détermine la valeur (σs_vₛ₁.t) de statistique de précision du capteur à l'aide d'une courbe (Kₛ₁) caractéristique ou d'une fonction de capteur déterminée pour le au moins un capteur (S1).

11. Procédé suivant la revendication 10,
**caractérisé en ce que**,
lors d'un déplacement de test réel ou simulé du véhicule (F) ou d'un véhicule de test utilisé au lieu de lui, on détecte, au moyen du au moins un capteur (S1) ou au moyen d'un capteur de test utilisé au lieu de lui du même type de capteur, respectivement des valeurs (nₛ₁.1, nₛ₁.2, nₛ₁.3, ...) de mesure de test et, à l'aide ces valeurs (nₛ₁.1, nₛ₁.2, nₛ₁.3, ...) de mesure de test, on détermine des valeurs (vₛ₁.1, vₛ₁.2, vₛ₁.3, ...) de test de la grandeur (v) de déplacement, et
**en ce que**, à l'aide des valeurs (vₛ₁.1, vₛ₁.2, vₛ₁.3, ...) de test de la grandeur (v) de déplacement pour le au moins un capteur (S1), on détermine une courbe de sa précision (σs_vₛ₁) statistique de capteur en fonction de la grandeur (v) de déplacement sous la forme de la courbe (Kₛ₁) caractéristique ou de la fonction de capteur respective.

12. Procédé suivant la revendication 11,
**caractérisé en ce que**
l'on modifie la grandeur (v) de déplacement du véhicule (F) ou du véhicule de test utilisé au lieu de lui lors de la circulation de test, en particulier par accélération prévisible et freinage prévisible, de manière à éviter sensiblement un glissement des roues du véhicule (F) sur le sol ou les rails (S).

13. Procédé suivant l'une des revendications 11 ou 12, **caractérisé en ce que**,
- au moyen d'un filtrage passe-bas, on forme, à partir des valeurs (vₛ₁.1, vₛ₁.2, vₛ₁.3, ...) de test des valeurs de filtre passe-bas,
- on détermine, pour chacune des valeurs de test sur la base des valeurs de filtre passe-bas, un écart-type (σs_vₛ₁.1, σs_vₛ₁.2, σs_vₛ₁.3, ...) mobile, et
- dans une représentation (D) formée ensuite des écarts-types mobiles en fonction des valeurs absolues (|vₛ₁.1|, |vₛ₁.2|, |vₛ₁.3|, ...) des valeurs (vₛ₁.1, vₛ₁.2, vₛ₁.3, ...) de test, on ajuste une droite de compensation, en particulier à l'aide de la méthode des moindres carrés, dans lequel la droite de compensation indique la courbe de la précision (σs_vₛ₁) statistique du au moins un capteur (S1) en fonction de la grandeur (v) de déplacement.

14. Procédé suivant la revendication 1,
**caractérisé en ce que**
l'on détermine, comme valeur (dₛ₁.t) d'innovation, la différence entre la valeur (vₛ₁.t) de la grandeur (v) de déplacement et la valeur (v*.t) prévisible de la grandeur (v) de déplacement.

15. Procédé suivant la revendication 14,
**caractérisé en ce que**
- à l'aide du modèle (BM) de déplacement appliqué à une valeur (σ_SZ.tp) de précision précédente de l'état de système, ainsi que d'un modèle (UM) de transmission appliqué à un bruit (SR) de système donné à l'avance, on détermine une valeur (σ_SZ*.t) de précision de l'état de système de l'état (SZ*.t) de système prévisible,
- à l'aide de la valeur (σ_SZ*.t) de précision d'état de système de l'état (SZ*.t) de système prévisible et du modèle (TM) de transfert, on détermine une valeur (σ_v*.t) de précision de la valeur (v*.t) prévisible de la grandeur (v) de déplacement,
- on détermine, comme valeur (σ_dₛ₁.t) de précision d'innovation, la somme de la valeur (σ_v*.t) de précision, de la valeur (v*.t) prévisible de la grandeur (v) de déplacement et de la valeur (σs_vₛ₁.t) de précision de capteur, et
- on détermine, comme valeur (TGₛ₁.t) de grandeur de test, le quotient de la valeur absolue (|dₛ₁.t|) de la valeur (dₛ₁.t) d'innovation par la valeur (σ_dₛ₁.t) de précision d'innovation.

16. Procédé suivant la revendication 14,
**caractérisé en ce que**
- l'on détermine une valeur (d'ₛ₁.t) résiduelle, comme produit de la valeur (dₛ₁.t) d'innovation par un facteur (GF) de pondération donné à l'avance,
- l'on détermine, comme produit du facteur (GF) de pondération, multiplié par moins un, par la valeur (σs_vₛ₁.t) de précision de capteur, une valeur (σs_d'ₛ₁.t) de précision résiduelle, et
- l'on détermine, comme valeur (TG'ₛ₁.t) de grandeur de test supplémentaire, le quotient de la valeur absolue (|d'ₛ₁.t|) de la valeur (d'ₛ₁.t) résiduelle par la valeur (σs_d'ₛ₁.t) de précision résiduelle.

17. Procédé suivant l'une des revendications 1 à 16,
**caractérisé en ce que**
l'on détermine la une limite (TS) de test comme quantile de la distribution normale standard de l'ordre 1-α/2, dans lequel on donne à l'avance une valeur (Wα) pour α comme probabilité d'erreur.

18. Procédé suivant l'une des revendications 3 à 16,
**caractérisé en ce que**
l'on détermine la limite (TS') de test supplémentaire comme quantile de la répartition normale standard de l'ordre 1-α/2, dans lequel on donne à l'avance une valeur (W'α) supplémentaire pour α comme probabilité d'erreur.

19. Agencement (A) d'identification d'écarts (sA) systématiques dans la détermination d'une grandeur (v) de déplacement d'un véhicule (F) terrestre, en particulier guidé sur rail, qui comprend au moins un capteur (S1) comprenant une unité (RE) informatique, sur laquelle un logiciel peut être exécuté, lequel fait que l'agencement (A) exécute un procédé suivant l'une des revendications 1 à 18.

20. Véhicule (F) terrestre, en particulier guidé sur rail, comprenant un agencement (A) suivant la revendication 19.
